# EUROPEAN PATENT APPLICATION

(11) **EP 4 711 631 A1**
(43) Date of publication of application: **18.03.2026**
(21) Application number: 24929797.9
(22) Date of filing: 12.03.2024
(51) Int. Cl.: F16B 7/20

(54) **PIPE ASSEMBLY, PROCESSING PATH GENERATION METHOD, PROGRAM, AND LASER PROCESSING SYSTEM**

(71) Applicant: Yamazaki Mazak Corporation, Niwa-gun, Aichi 480-0197 (JP)
(72) Inventor: KATAYAMA, Takuro, Niwa-gun, Aichi 480-0197 (JP); SAKAI, Yoshihiko, Niwa-gun, Aichi 480-0197 (JP); KOIKE, Shunsuke, Niwa-gun, Aichi 480-0197 (JP); IIDA, Shuto, Niwa-gun, Aichi 480-0197 (JP); MILEVICH, Alexander, Niwa-gun, Aichi 480-0197 (JP)
(74) Representative: TBK
(86) International application number: PCT/JP2024/009569
(87) International publication number: WO 2025/191690

(57) **Abstract**

A pipe assembly includes a first rectangular pipe that includes a first notch having a width dimension of a first value in a direction along a first direction and a length dimension of a second value in a direction along a second direction, and extends in the first direction, and a second rectangular pipe that includes a first portion received in the first notch and a second portion extending in the second direction from the first portion, and is disposed to cross the first rectangular pipe. A width dimension of the first portion in the direction along the first direction is smaller than a width dimension of the second portion in the direction along the first direction. A length dimension of the first portion in the direction along the second direction is substantially the same as the second value. The width dimension of the first portion in the direction along the first direction is substantially the same as the first value.

## Description

### Technical Field

The present invention relates to a pipe assembly, a machining path generation method, a program, and a laser beam machining system.

### Background Art

A technique of creating a pipe structure by combining a plurality of pipes has been known.

Example related techniques include an assembling method of a structure of a building structure composed of a pipe structure unit disclosed in Patent Literature 1. The assembling method of a structure of a building structure composed of a pipe structure unit disclosed in Patent Literature 1 includes temporarily tightening a mounting unit of each pipe to the corresponding member; joining a plurality of pipes on an assembly jig to form a joint portion; compressing a gap formed between the joint portion and the mounting units by lifting the assembly jig; and fixing the joint portion via welding.

### Citation List

### Patent Literature

PTL1: JP 4813874 B2.

### Summary of Invention

### Technical Problem

An object of the present invention is to provide a machining path generation method, a program, and a laser beam machining system enabling production of a pipe assembly with two rectangular pipes suitably positioned, or production of two rectangular pipes that can be easily positioned with each other.

### Solution to Problem

A pipe assembly according to some embodiments includes a first rectangular pipe that includes a first notch having a width dimension of a first value in a direction along a first direction and a length dimension of a second value in a direction along a second direction, and extends in the first direction, and a second rectangular pipe that includes a first portion received in the first notch and a second portion extending in the second direction from the first portion, and is disposed to cross the first rectangular pipe. A width dimension of the first portion in the direction along the first direction is smaller than a width dimension of the second portion in the direction along the first direction. A length dimension of the first portion in the direction along the second direction is substantially the same as the second value. The width dimension of the first portion in the direction along the first direction is substantially the same as the first value.

A machining path generation method according to some embodiments includes creating, as a shape model of a first rectangular pipe, a first pipe model that includes a first notch having a width dimension of a first value in a direction along a first direction and a length dimension of a second value in a direction along a second direction, and extends in the first direction, creating, as a shape model of a second rectangular pipe to be disposed to cross the first rectangular pipe, a second pipe model that includes a first portion received in the first notch and a second portion extending in the second direction from the first portion, generating a first machining path for producing the first rectangular pipe from a first pipe material, based on three-dimensional shape data of the first pipe model, and generating a second machining path for producing the second rectangular pipe from a second pipe material, based on three-dimensional shape data of the second pipe model. A width dimension of the first portion in the direction along the first direction is smaller than a width dimension of the second portion in the direction along the first direction. A length dimension of the first portion in the direction along the second direction is substantially the same as the second value. The width dimension of the first portion in the direction along the first direction is substantially the same as the first value.

A program according to some embodiments is a program for causing a machining path generator or a laser beam machining system to execute the machining path generation method described above.

A laser beam machining system according to some embodiments includes a machining path generator configured to execute first processing of creating, as a shape model of a first rectangular pipe, a first pipe model that includes a first notch having a width dimension of a first value in a direction along a first direction and a length dimension of a second value in a direction along a second direction, and extends in the first direction, second processing of creating, as a shape model of a second rectangular pipe to be disposed to cross the first rectangular pipe, a second pipe model that includes a first portion received in the first notch and a second portion extending in the second direction from the first portion, third processing of generating a first machining path for producing the first rectangular pipe from a first pipe material, based on three-dimensional shape data of the first pipe model, and fourth processing of generating a second machining path for producing the second rectangular pipe from a second pipe material, based on three-dimensional shape data of the second pipe model, a controller configured to execute at least one machining program created based at least on the first machining path and the second machining path, to generate a control command and transmit the generated control command to a laser beam machine, and the laser beam machine configured to operate based on the control command to produce the first rectangular pipe from the first pipe material by irradiating the first pipe material with a laser beam, and produce the second rectangular pipe from the second pipe material by irradiating the second pipe material with the laser beam. The second processing includes creating the second pipe model with a width dimension of the first portion in the direction along the first direction set to be smaller than a width dimension of the second portion in the direction along the first direction, and with a length dimension of the first portion in the direction along the second direction to be substantially the same as the second value. The first processing includes creating the first pipe model with the first value being substantially the same as the width direction of the first portion in the direction along the first direction.

### Effects of Invention

With the present invention, a machining path generation method, a program, and a laser beam machining system enabling production of a pipe assembly with two rectangular pipes suitably positioned, or production of two rectangular pipes that can be easily positioned with each other can be provided.

### Brief Description of Drawings

[FIG. 1] FIG. 1 is a schematic perspective view schematically illustrating a pipe assembly according to embodiment 1.
[FIG. 2] FIG. 2 is a schematic perspective view schematically illustrating the pipe assembly according to embodiment 1.
[FIG. 3] FIG. 3 is a schematic perspective view schematically illustrating an example of a first rectangular pipe.
[FIG. 4] FIG. 4 is a schematic perspective view schematically illustrating an example of a second rectangular pipe.
[FIG. 5] FIG. 5 is a schematic perspective view schematically illustrating an example of the first rectangular pipe.
[FIG. 6] FIG. 6 is a schematic plan view schematically illustrating the pipe assembly according to embodiment 1.
[FIG. 7] FIG. 7 is a cross-sectional view taken along line A-A in FIG. 6.
[FIG. 8] FIG. 8 is a schematic perspective view schematically illustrating a pipe assembly according to modification 1 of embodiment 1.
[FIG. 9] FIG. 9 is a schematic side view schematically illustrating the pipe assembly according to embodiment 1.
[FIG. 10] FIG. 10 is a cross-sectional view taken along line B-B in FIG. 9
[FIG. 11] FIG. 11 is a cross-sectional view taken along line C-C in FIG. 9.
[FIG. 12] FIG. 12 is a cross-sectional view taken along line D-D in FIG. 9.
[FIG. 13] FIG. 13 is a schematic cross-sectional view illustrating one portion of a pipe assembly according to Comparative Example.
[FIG. 14] FIG. 14 is a schematic perspective view schematically illustrating a pipe assembly according to modification 2 of embodiment 1.
[FIG. 15] FIG. 15 is a schematic front view schematically illustrating one portion of the second rectangular pipe.
[FIG. 16] FIG. 16 is a schematic perspective view schematically illustrating one portion of the second rectangular pipe.
[FIG. 17] FIG. 17 is a cross-sectional view taken along line F-F in FIG. 9.
[FIG. 18] FIG. 18 is a schematic perspective view schematically illustrating one portion of the pipe assembly according to embodiment 1.
[FIG. 19] FIG. 19 is a schematic perspective view schematically illustrating one portion of the second rectangular pipe.
[FIG. 20] FIG. 20 is a schematic cross-sectional view schematically illustrating one portion of a pipe assembly according to modification 3 of embodiment 1.
[FIG. 21] FIG. 21 is a schematic perspective view schematically illustrating one portion of the pipe assembly according to embodiment 1.
[FIG. 22] FIG. 22 is a schematic perspective view schematically illustrating a pipe assembly according to modification 4 of embodiment 1.
[FIG. 23] FIG. 23 is a schematic perspective view schematically illustrating an example of the first rectangular pipe.
[FIG. 24] FIG. 24 is a schematic perspective view schematically illustrating an example of the second rectangular pipe.
[FIG. 25] FIG. 25 is a diagram schematically illustrating a laser beam machining system according to embodiment 2.
[FIG. 26] FIG. 26 is a diagram schematically illustrating how a machining path generator receives shape data of a plurality of basic models from a CAD device.
[FIG. 27] FIG. 27 is a schematic perspective view schematically illustrating a combination of a first pipe model and a second pipe model.
[FIG. 28] FIG. 28 is a schematic perspective view schematically illustrating the first pipe model.
[FIG. 29] FIG. 29 is a schematic perspective view schematically illustrating the second pipe model.
[FIG. 30] FIG. 30 is a schematic perspective view schematically illustrating the first pipe model.
[FIG. 31] FIG. 31 is a diagram schematically illustrating an example of the machining path generator.
[FIG. 32] FIG. 32 is a diagram schematically illustrating an example of a traveling path of a laser beam.
[FIG. 33] FIG. 33 is a diagram schematically illustrating an example of a traveling path of a laser beam.
[FIG. 34] FIG. 34 is a diagram schematically illustrating the laser beam machining system according to embodiment 2.
[FIG. 35] FIG. 35 is a diagram schematically illustrating the laser beam machining system according to embodiment 2.
[FIG. 36] FIG. 36 is a schematic perspective view schematically illustrating an assembly model that is a combination of a plurality of models including a first basic model and a second basic model.
[FIG. 37] FIG. 37 is a schematic perspective view schematically illustrating the first basic model.
[FIG. 38] FIG. 38 is a schematic perspective view schematically illustrating the second basic model.
[FIG. 39] FIG. 39 is a schematic perspective view schematically illustrating the assembly model, which is a combination of a plurality of models including the first basic model and the second basic model.
[FIG. 40] FIG. 40 is a diagram illustrating an example of an image displayed on a display.
[FIG. 41] FIG. 41 is a diagram illustrating an example of an image displayed on the display.
[FIG. 42] FIG. 42 is a diagram illustrating an example of an image displayed on the display.
[FIG. 43] FIG. 43 is a diagram illustrating an example of an image displayed on the display.
[FIG. 44] FIG. 44 is a diagram schematically illustrating an example of the machining path generator.
[FIG. 45] FIG. 45 is a diagram schematically illustrating the laser beam machining system according to embodiment 2.
[FIG. 46] FIG. 46 is a diagram illustrating an example of an image displayed on the display.
[FIG. 47] FIG. 47 is a diagram illustrating an example of an image displayed on the display.
[FIG. 48] FIG. 48 is a diagram illustrating an example of an image displayed on the display.
[FIG. 49] FIG. 49 is a diagram illustrating an example of an image displayed on the display.
[FIG. 50] FIG. 50 is a flowchart illustrating an example of a laser beam machining method according to embodiment 3.
[FIG. 51] FIG. 51 is a diagram schematically illustrating an example of a non-volatile storage medium that records a program.

### Description of Embodiments

A pipe assembly 1, a machining path generation method, a program P, and a laser beam machining system 100 according to embodiments will now be described with reference to the accompanying drawings. In the description of the embodiments, portions and members having the same functions are denoted by the same reference numerals, and the redundant description on the portions and the members denoted by the same reference numerals will be omitted.

### (Embodiment 1)

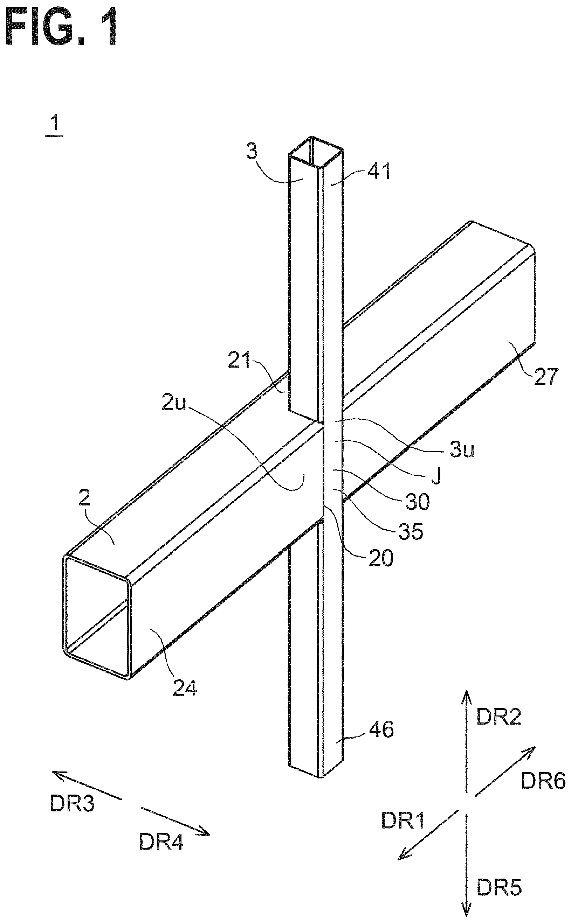

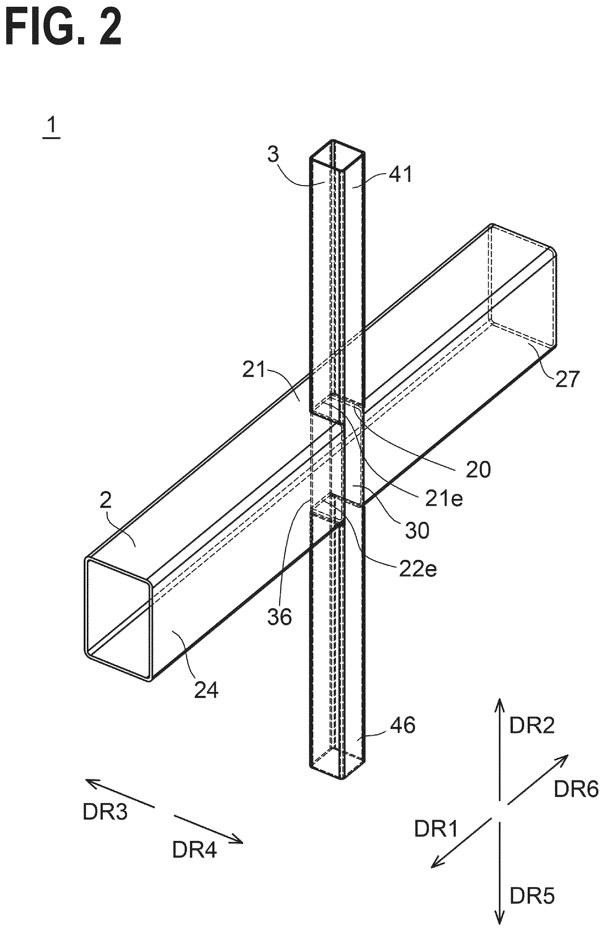

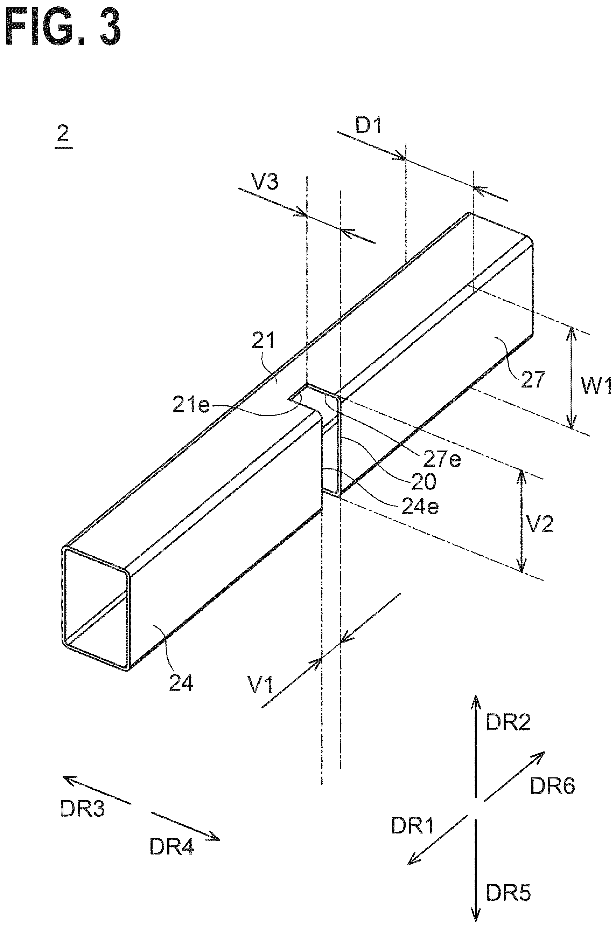

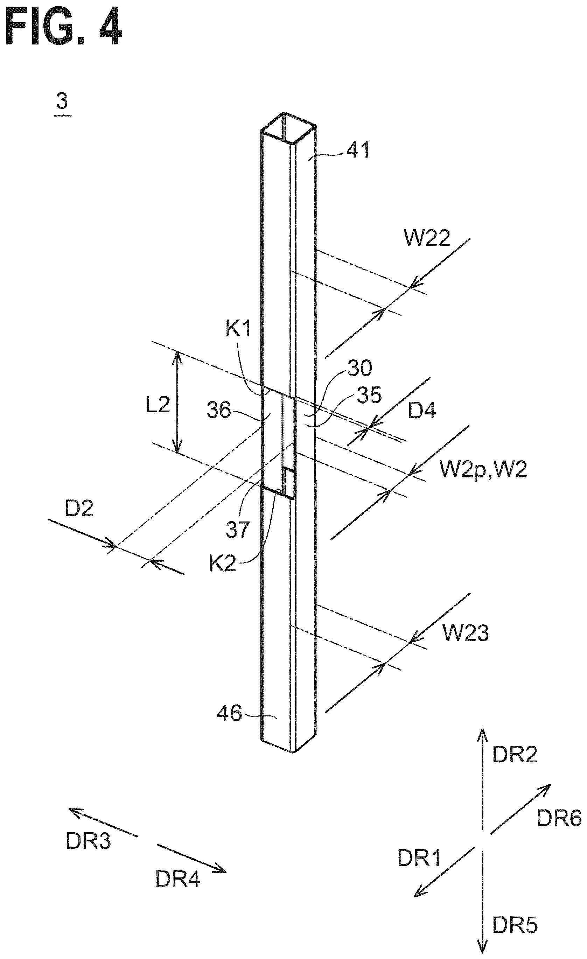

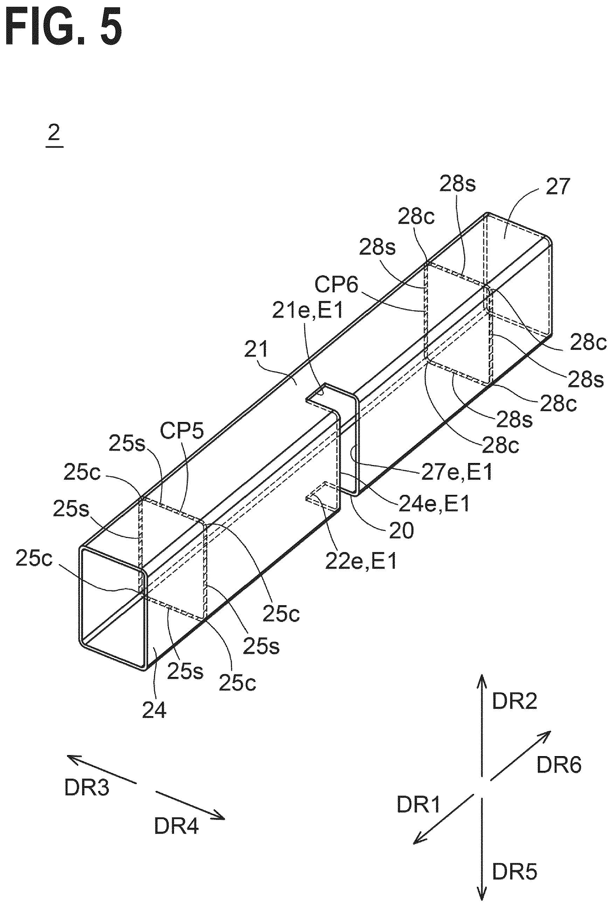

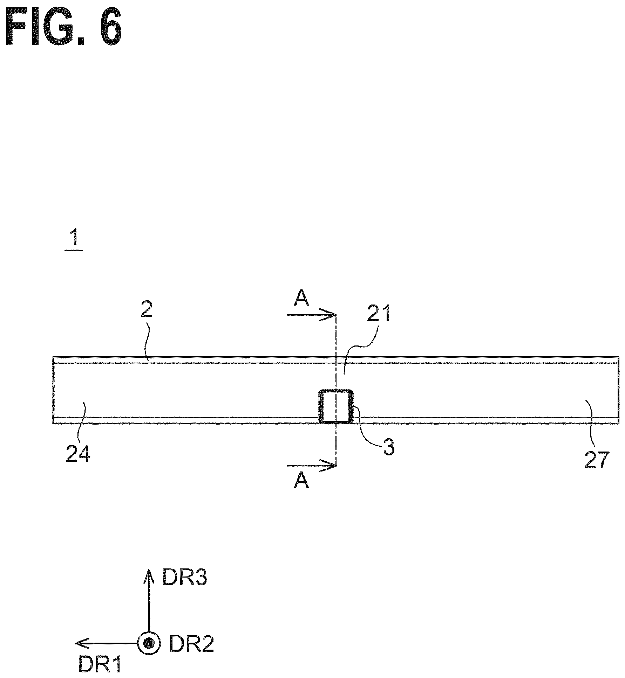

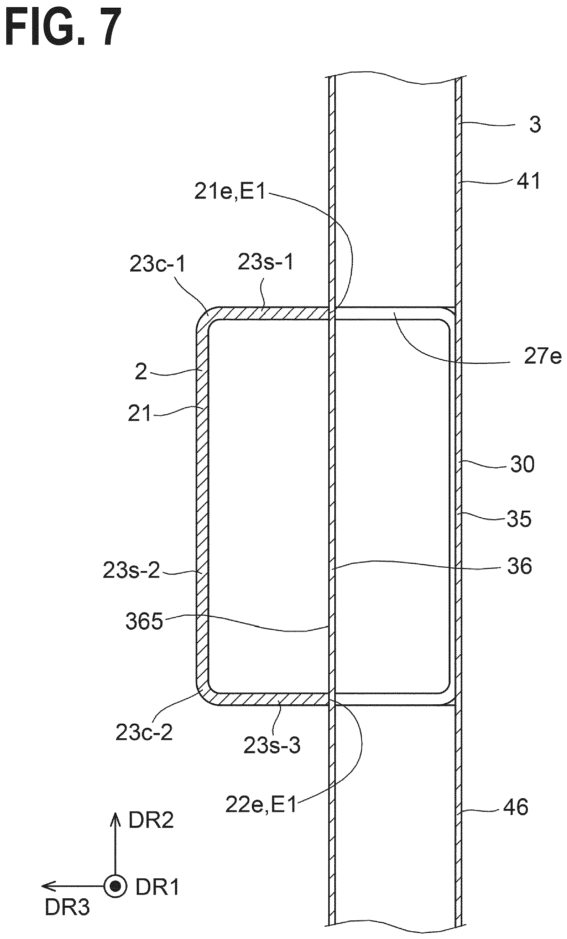

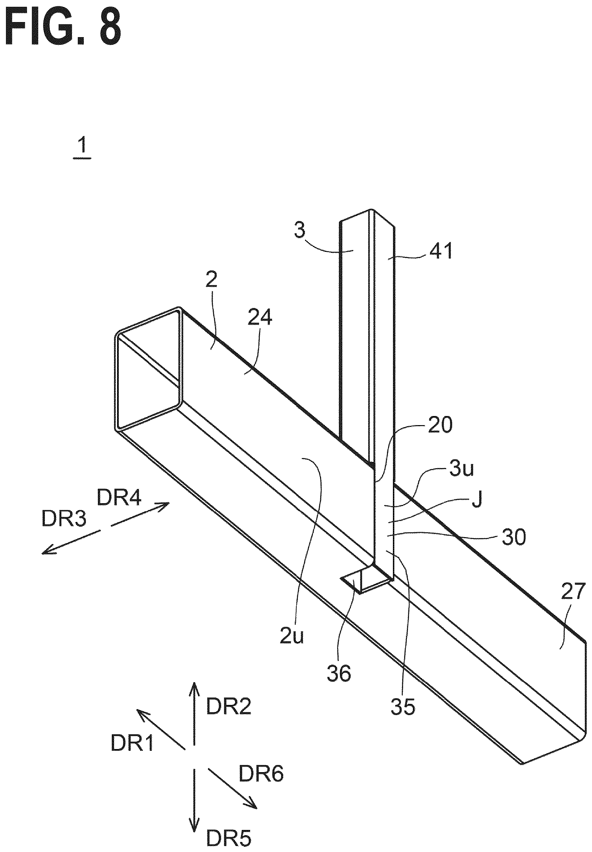

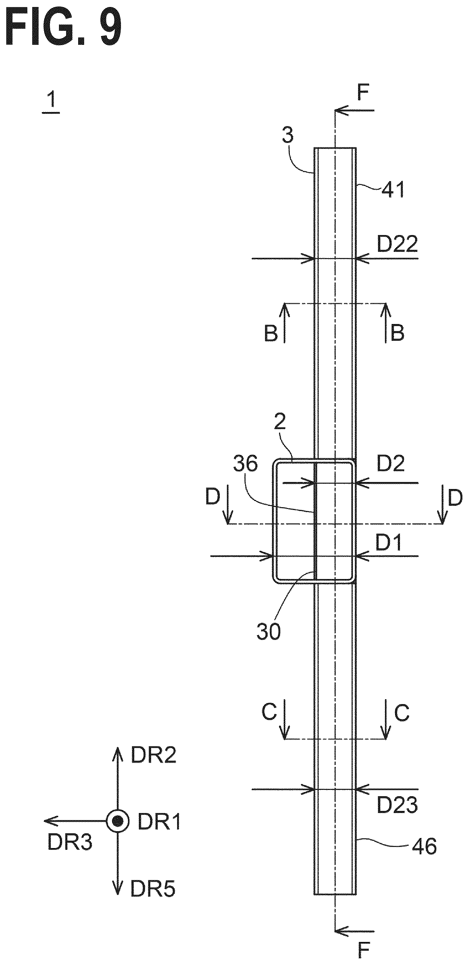

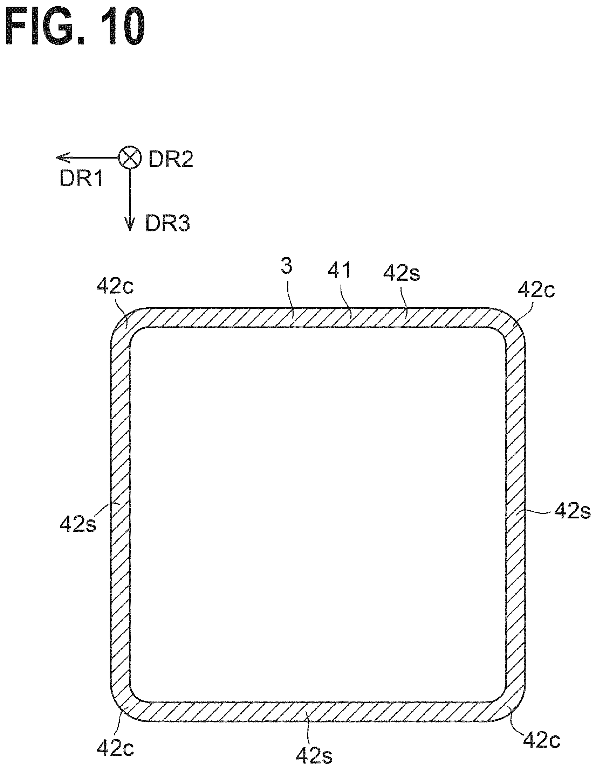

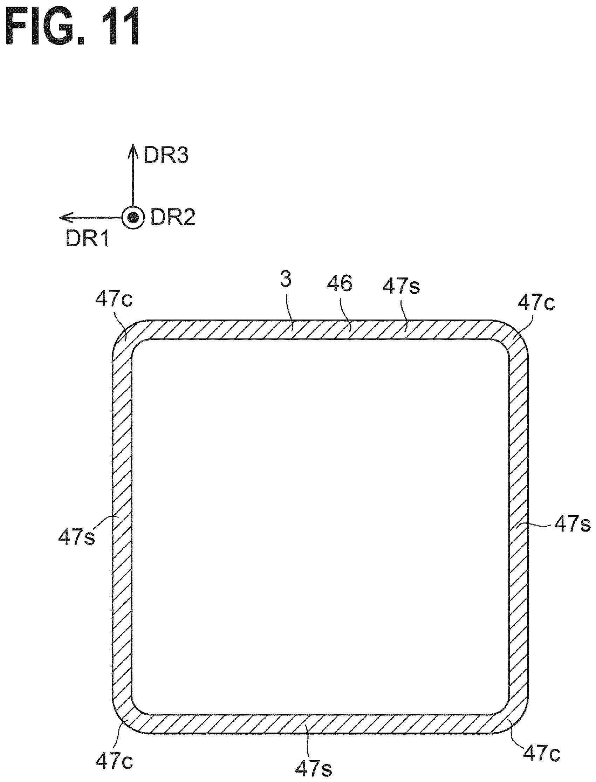

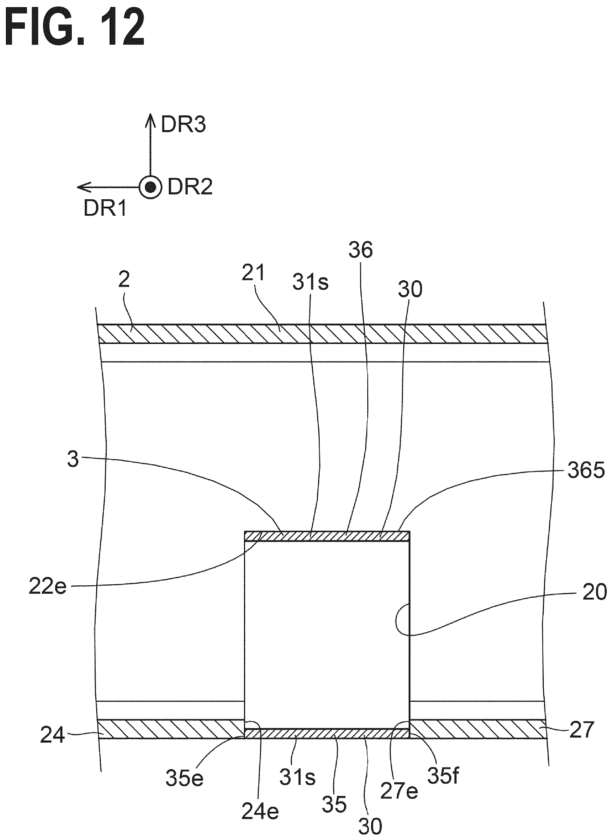

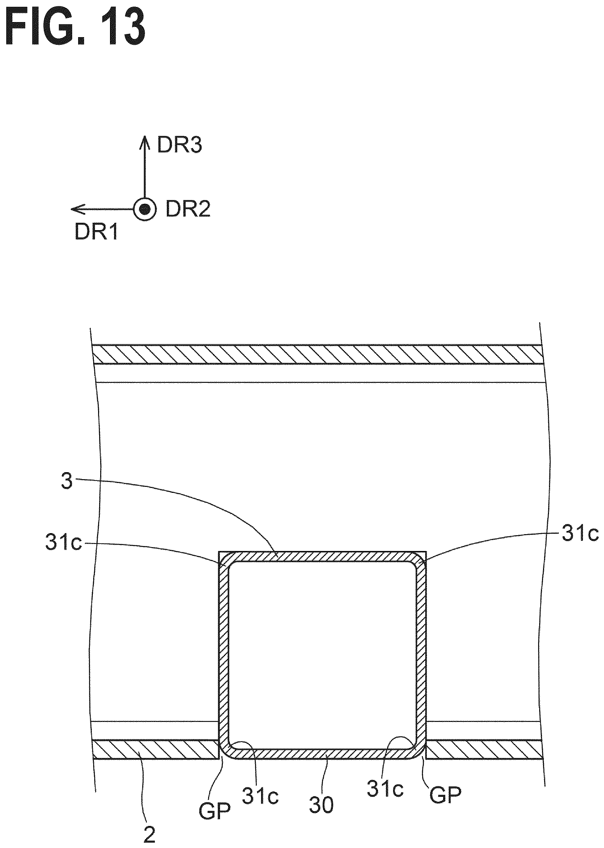

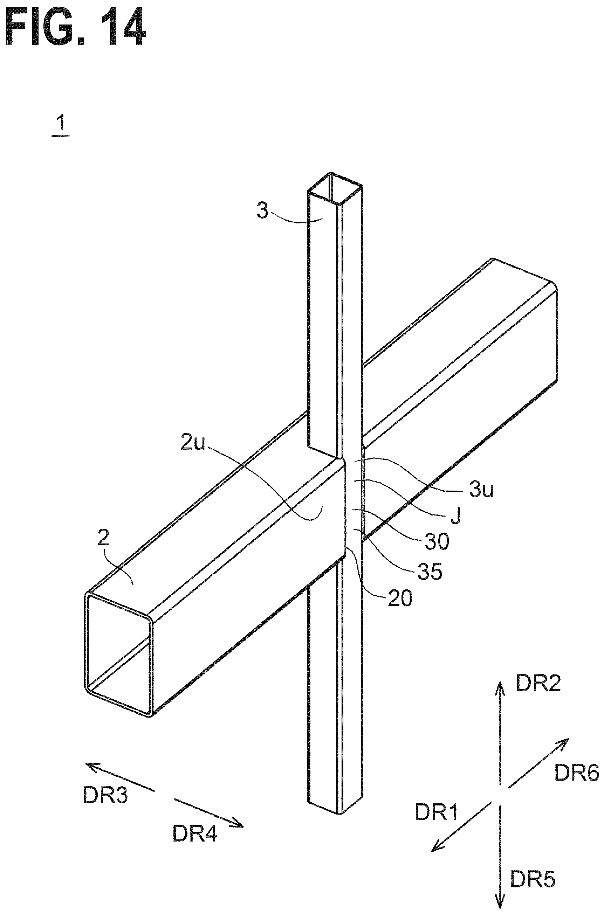

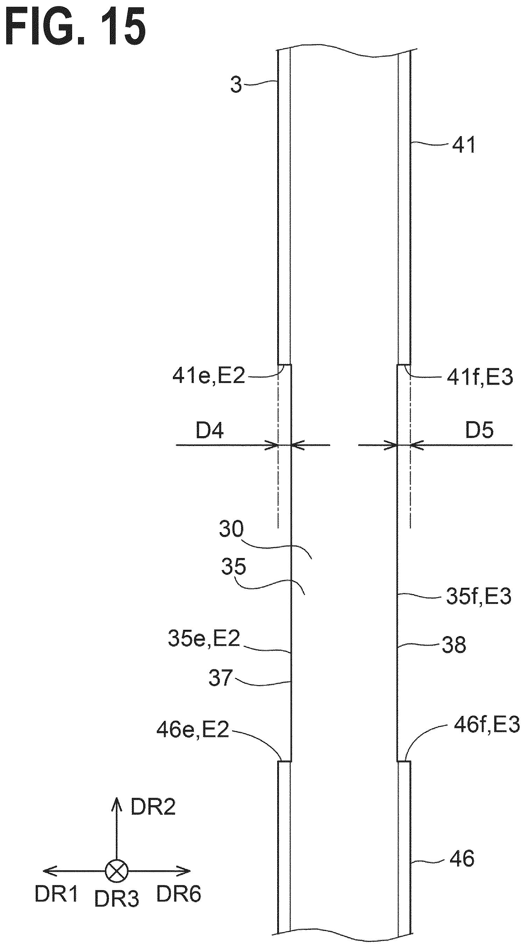

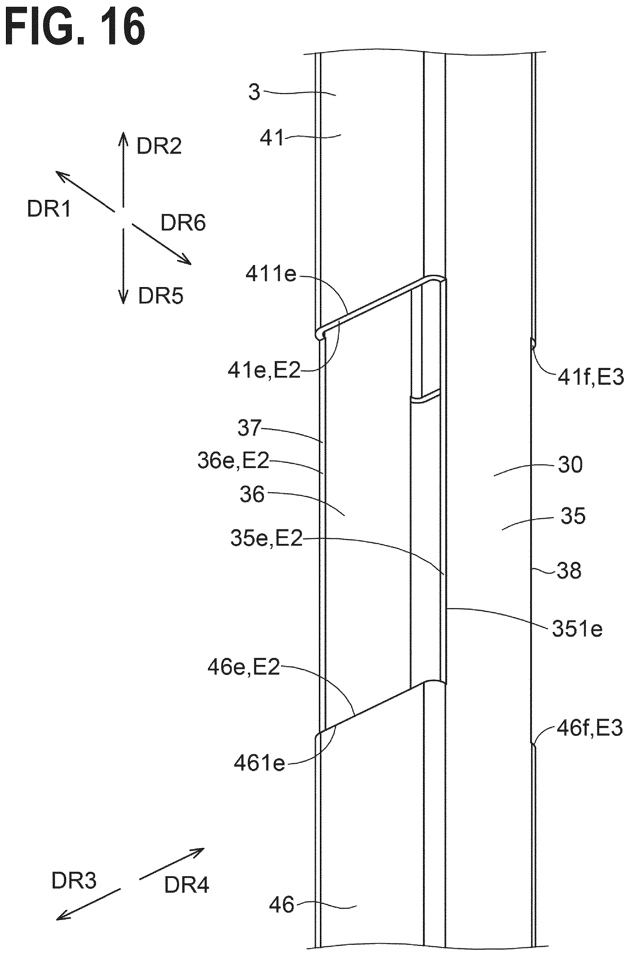

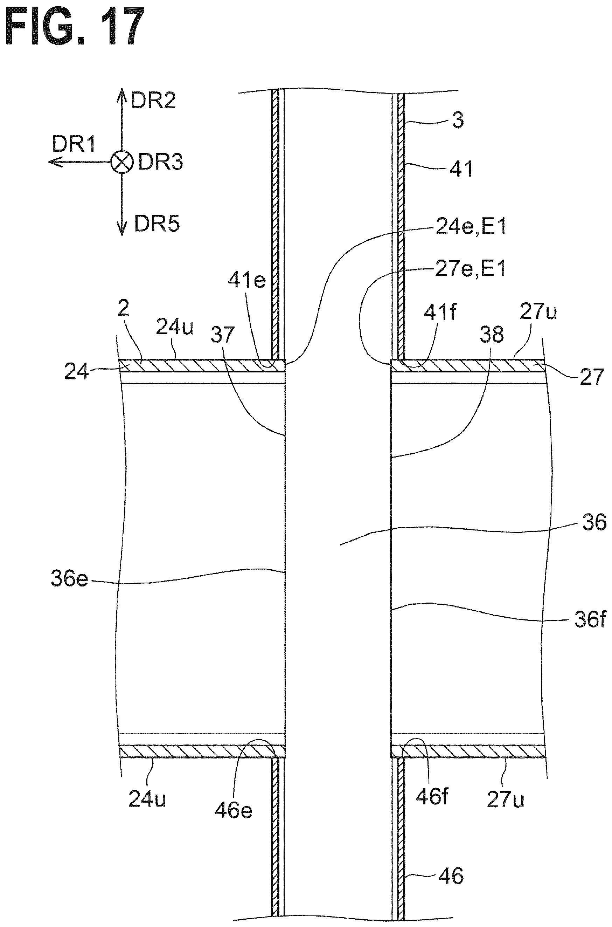

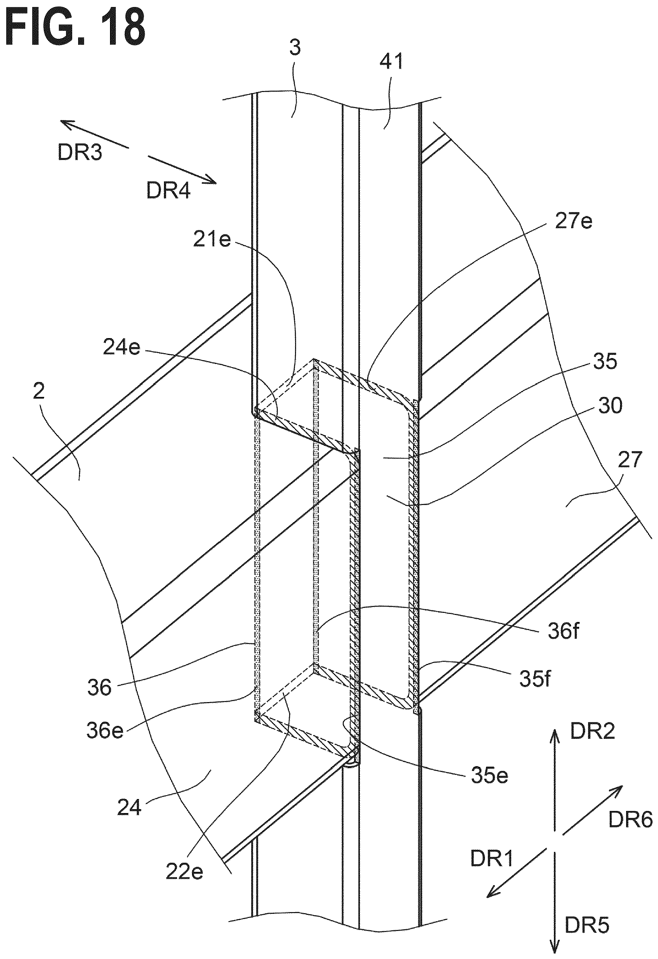

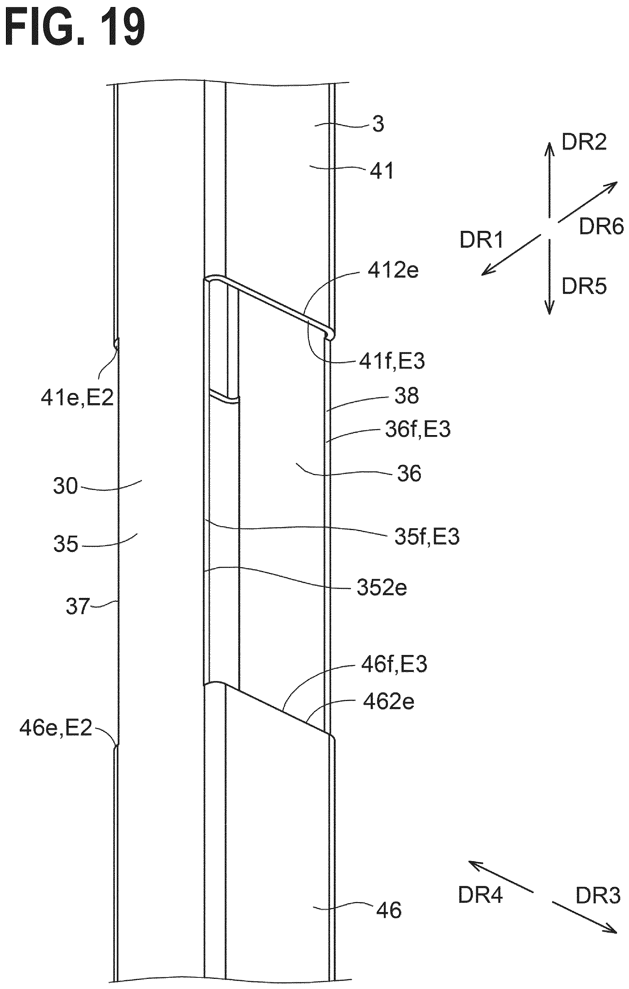

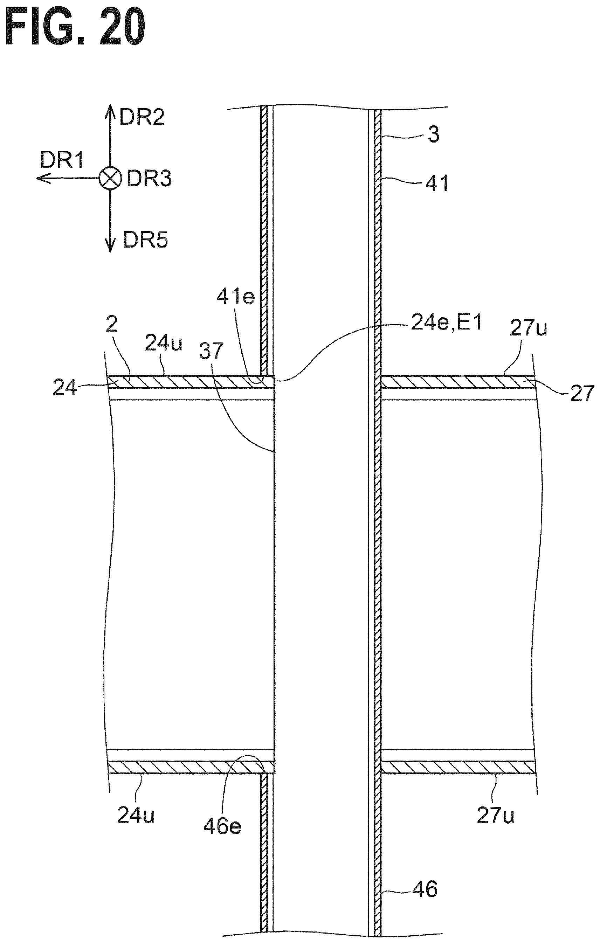

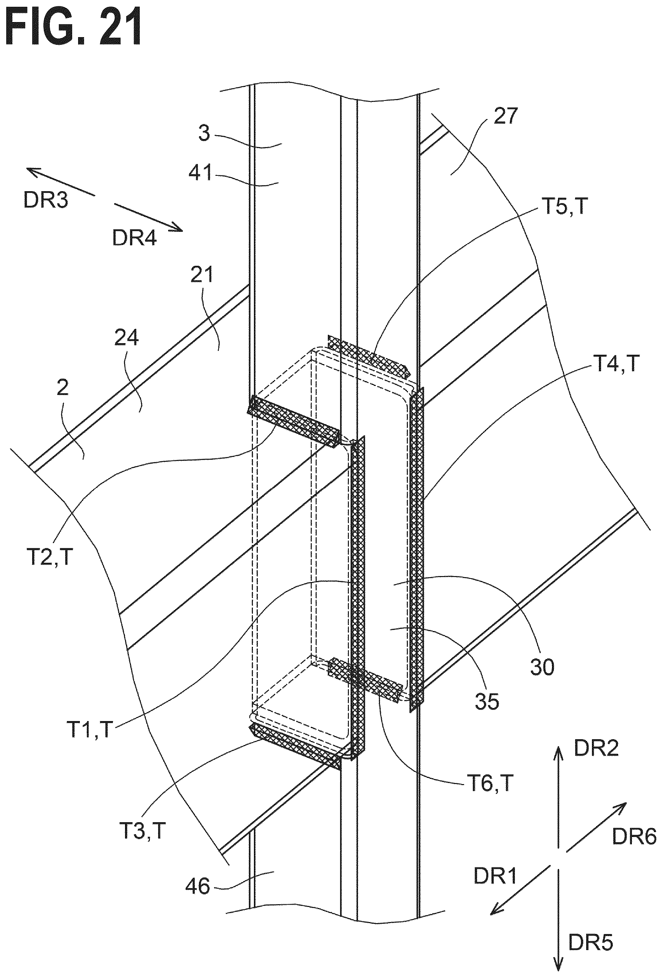

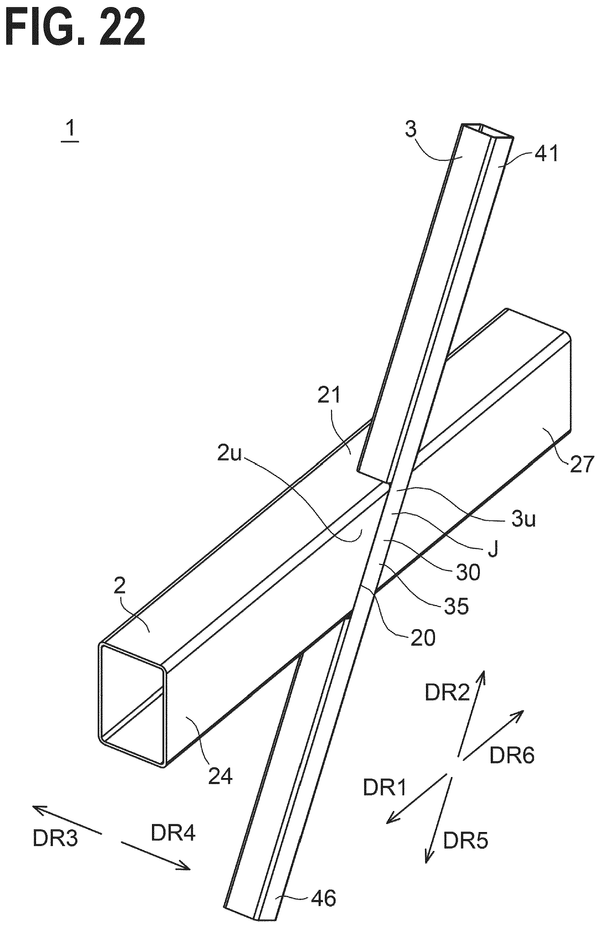

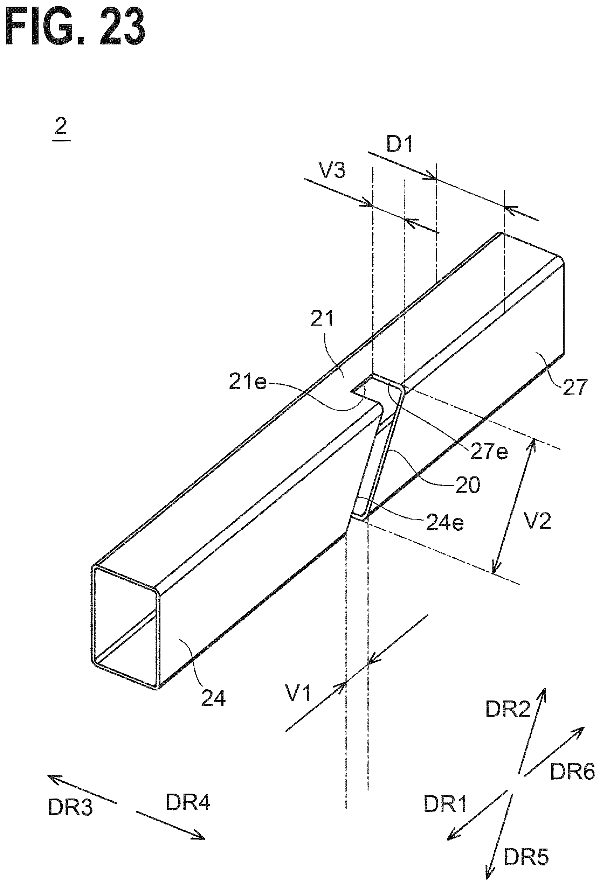

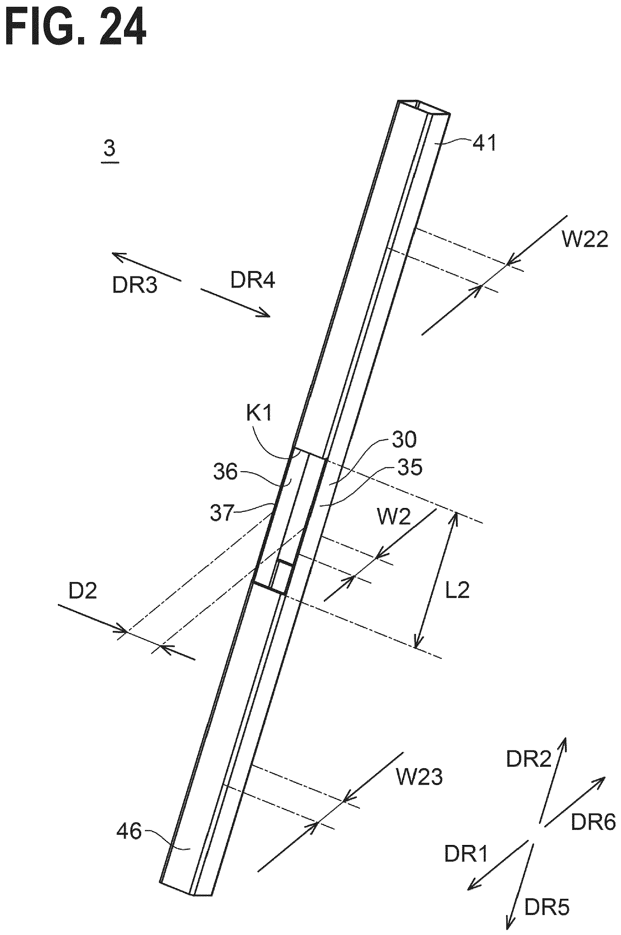

A pipe assembly 1 according to embodiment 1 will be described with reference to FIG. 1 to FIG. 24. FIG. 1 and FIG. 2 are schematic perspective views schematically illustrating the pipe assembly 1 according to embodiment 1. FIG. 3 is a schematic perspective view schematically illustrating an example of a first rectangular pipe 2. FIG. 4 is a schematic perspective view schematically illustrating an example of a second rectangular pipe 3. FIG. 5 is a schematic perspective view schematically illustrating an example of the first rectangular pipe 2. FIG. 6 is a schematic plan view schematically illustrating the pipe assembly 1 according to embodiment 1. FIG. 7 is a cross-sectional view taken along line A-A in FIG. 6. FIG. 8 is a schematic perspective view schematically illustrating a pipe assembly 1 according to modification 1 of embodiment 1. FIG. 9 is a schematic side view schematically illustrating the pipe assembly according to embodiment 1. FIG. 10 is a cross-sectional view taken along line B-B in FIG. 9. FIG. 11 is a cross-sectional view taken along line C-C in FIG. 9. FIG. 12 is a cross-sectional view taken along line D-D in FIG. 9. FIG. 13 is a schematic cross-sectional view illustrating one portion of a pipe assembly according to Comparative Example. FIG. 14 is a schematic perspective view schematically illustrating a pipe assembly 1 according to modification 2 of embodiment 1. FIG. 15 is a schematic front view schematically illustrating one portion of the second rectangular pipe 3. FIG. 16 is a schematic perspective view schematically illustrating one portion of the second rectangular pipe 3. FIG. 17 is a cross-sectional view taken along line F-F in FIG. 9. FIG. 18 is a schematic perspective view schematically illustrating one portion of the pipe assembly 1 according to embodiment 1. FIG. 19 is a schematic perspective view schematically illustrating one portion of the second rectangular pipe 3. FIG. 20 is a schematic cross-sectional view schematically illustrating one portion of a pipe assembly 1 according to modification 3 of embodiment 1. FIG. 21 is a schematic perspective view schematically illustrating one portion of the pipe assembly 1 according to embodiment 1. FIG. 22 is a schematic perspective view schematically illustrating a pipe assembly 1 according to modification 4 of embodiment 1. FIG. 23 is a schematic perspective view schematically illustrating an example of the first rectangular pipe 2. FIG. 24 is a schematic perspective view schematically illustrating an example of the second rectangular pipe 3.

As in the example illustrated in FIG. 1, the pipe assembly 1 includes a first rectangular pipe 2 and a second rectangular pipe 3 disposed to cross the first rectangular pipe 2.

As in the example illustrated in FIG. 2, the first rectangular pipe 2 has a first notch 20 and extends in a first direction DR1.

As in the example illustrated in FIG. 3, a width dimension of the first notch 20 in a direction along the first direction DR1 is defined as a first value V1. In other words, the width dimension of the first notch 20 in the direction along the first direction DR1 is of the first value V1.

As in the example illustrated in FIG. 3, a length dimension of the first notch 20 in a direction along a second direction DR2 is defined as a second value V2. In other words, the length dimension of the first notch 20 in the direction along the second direction DR2 is of the second value V2. In the example illustrated in FIG. 1 to FIG. 3, the second direction DR2 is a direction substantially orthogonal to the first direction DR1. Alternatively, the second direction DR2 may be a direction inclined with respect to the first direction DR1 (see FIG. 22).

As in the example illustrated in FIG. 3, a depth dimension of the first notch 20 in a direction along a third direction DR3 is defined as a third value V3. In other words, the depth dimension of the first notch 20 in a direction along the third direction DR3 is of the third value V3. In the example illustrated in FIG. 1 to FIG. 3, the third direction DR3 is a direction substantially orthogonal to the first direction DR1. The third direction DR3 is a direction substantially orthogonal to the second direction DR2.

As in the example illustrated in FIG. 1, the second rectangular pipe 3 includes a first portion 30 and a second portion 41. As in the example illustrated in FIG. 2, the first portion 30 is received in the first notch 20 of the first rectangular pipe 2. The second portion 41 extends from the first portion 30 in the second direction DR2.

In the example illustrated in FIG. 2, the extending direction (in other words, second direction DR2) of the second rectangular pipe 3 is a direction substantially orthogonal to the extending direction (in other words, first direction DR1) of the first rectangular pipe 2. Alternatively, the extending direction of the second rectangular pipe 3 may be a direction inclined with respect to the extending direction of the first rectangular pipe 2 (see FIG. 22).

In the example illustrated in FIG. 4, a width dimension W2 of the first portion 30 in the direction along the first direction DR1 is smaller than a width dimension W22 of the second portion 41 in the direction along the first direction DR1.

In the example illustrated in FIG. 3 and FIG. 4, a length dimension L2 of the first portion 30 in the direction along the second direction DR2 (see FIG. 4) is substantially the same as the above-described second value V2 (see FIG. 3). The width dimension W2 of the first portion 30 in the direction along the first direction DR1 (see FIG. 4) is substantially the same as the above-described first value V1 (see FIG. 3). For smoothly inserting the first portion 30 in the first notch 20, the size of the first notch 20 may be larger than the size of the first portion 30 within a range of backlash. In this specification, the term " substantially the same" is used with a meaning that a certain amount of backlash is tolerated.

In the pipe assembly 1 according to embodiment 1, the width dimension W2 of the first portion 30 of the second rectangular pipe 3 is smaller than the width dimension W22 of the second portion 41 of the second rectangular pipe 3 (see FIG. 4). In this case, the second rectangular pipe 3 can be positioned with the first rectangular pipe 2 using a boundary portion K1 between the first portion 30 and the second portion 41 (more specifically, a step between the first portion 30 and the second portion 41). If there is no step between the first portion 30 and the second portion 41, the second rectangular pipe 3 is difficult to position with the first rectangular pipe 2 in a direction parallel to the second direction DR2, meaning that a dedicated positioning jig is required.

In the pipe assembly 1 according to embodiment 1, the length dimension L2 of the first portion 30 of the second rectangular pipe 3 (see FIG. 4) is substantially the same as the second value V2 corresponding to the length dimension of the first notch 20 of the first rectangular pipe 2 (see FIG. 3). The width dimension W2 of the first portion 30 of the second rectangular pipe 3 (see FIG. 4) is substantially the same as the first value V1 corresponding to the width dimension of the first notch 20 of the first rectangular pipe 2 (see FIG. 3). Thus, with the first portion 30 of the second rectangular pipe 3 positioned using the first notch 20, the second rectangular pipe 3 is effectively positioned with the first rectangular pipe 2.

Assume an example where the first rectangular pipe 2 and the second rectangular pipe 3 are welded. In this case, in embodiment 1, the second rectangular pipe 3 is effectively positioned by the first rectangular pipe 2. Thus, positioning jigs for welding can be omitted, or the number of such positioning jigs can be reduced.

### (Optional Configurations)

Next, with reference to FIG. 1 to FIG. 24, the optional configurations that can be adopted in the pipe assembly 1 according to embodiment 1 will be described.

In this specification, a direction opposite to the first direction DR1 is defined as a sixth direction DR6. In this specification, a direction opposite to the second direction DR2 is defined as a fifth direction DR5. In this specification, a direction opposite to the third direction DR3 is defined as a fourth direction DR4.

### (First Notch 20)

The first rectangular pipe 2 includes the first notch 20 that receives the first portion 30 of the second rectangular pipe 3. In the example illustrated in FIG. 3, the first notch 20 has a shape in which a rectangular parallelepiped body with a length, a width, and a height respectively corresponding to the third value V3, the first value V1, and the second value V2 fits.

In the example illustrated in FIG. 5, the first rectangular pipe 2 includes a first C-shaped edge surface 24e and a second C-shaped edge surface 27e. The first portion 30 of the second rectangular pipe 3 (see FIG. 4) is sandwiched by the first C-shaped edge surface 24e and the second C-shaped edge surface 27e. Thus, the first portion 30 is positioned by the first C-shaped edge surface 24e and the second C-shaped edge surface 27e. More specifically, in the direction parallel to the first direction DR1, the first portion 30 is positioned by the first C-shaped edge surface 24e and the second C-shaped edge surface 27e.

In the example illustrated in FIG. 5, each of the first C-shaped edge surface 24e and the second C-shaped edge surface 27e is a surface parallel to the second direction DR2 and to the third direction DR3. In the example illustrated in FIG. 5, each of the first C-shaped edge surface 24e and the second C-shaped edge surface 27e is a surface substantially orthogonal to the first direction DR1. Alternatively, as in the example illustrated in FIG. 23, each of the first C-shaped edge surface 24e and the second C-shaped edge surface 27e may be a surface inclined with respect to the first direction DR1.

In the example illustrated in FIG. 5, the first rectangular pipe 2 include a first linear edge surface 21e and a second linear edge surface 22e. The first linear edge surface 21e connects a first end of the first C-shaped edge surface 24e and a first end of the second C-shaped edge surface 27e. The second linear edge surface 22e connects a second end of the first C-shaped edge surface 24e and a second end of the second C-shaped edge surface 27e. In the example illustrated in FIG. 5, each of the first linear edge surface 21e and the second linear edge surface 22e is a surface substantially orthogonal to the third direction DR3.

Each of the first linear edge surface 21e and the second linear edge surface 22e is disposed in contact with the first portion 30 of the second rectangular pipe 3 (more specifically, a later-described second plate portion 36).

The first notch 20 is defined by a plurality of edge surfaces E1. In the example illustrated in FIG. 5, the first notch 20 is defined by the first C-shaped edge surface 24e, the second C-shaped edge surface 27e, the first linear edge surface 21e, and the second linear edge surface 22e.

### (First Rectangular Pipe 2)

The first rectangular pipe 2 is, for example, a hollow pipe made of metal. In the example illustrated in FIG. 5, the first rectangular pipe 2 has a substantially rectangular shape in a cross section orthogonal to the first direction DR1. In this specification, the rectangle includes square. The first rectangular pipe 2 may be provided with a through hole portion in which a pin, a bolt, or the like is inserted. Alternatively or additionally, the first rectangular pipe 2 may be provided with an elongated hole or a slit.

In the example illustrated in FIG. 3, a width dimension W1 of the first rectangular pipe 2 in the direction along the second direction DR2 is the same as the above-described second value V2 (in other words, the length dimension of the first notch 20 in the direction along the second direction DR2). A depth dimension D1 of the first rectangular pipe 2 in the direction along the third direction DR3 is larger than the above-described third value V3 (in other words, the depth dimension of the first notch 20 in the direction along the third direction DR3).

In the example illustrated in FIG. 3, the first rectangular pipe 2 includes a fourth portion 21, a fifth portion 24, and a sixth portion 27.

In the example illustrated in FIG. 5, the fourth portion 21 includes the first linear edge surface 21e and the second linear edge surface 22e described above.

The fourth portion 21 has a substantially C-shape. More specifically, the fourth portion 21 has a substantially C-shape in a cross section orthogonal to the first direction DR1. More specifically, as in the example illustrated in FIG. 7, the fourth portion 21 includes, in a cross section orthogonal to the first direction DR1, a first linear portion 23s-1, a second linear portion 23s-2, a third linear portion 23s-3, a first arcuate corner portion 23c-1, and a second arcuate corner portion 23c-2. The third linear portion 23s-3 is disposed opposite to the first linear portion 23s-1. The first arcuate corner portion 23c-1 connects the first linear portion 23s-1 and the second linear portion 23s-2. The second arcuate corner portion 23c-2 connects the second linear portion 23s-2 and the third linear portion 23s-3.

As in the example illustrated in FIG. 5, the fifth portion 24 extends from the fourth portion 21 in the first direction DR1. The fifth portion 24 includes the above-described first C-shaped edge surface 24e. More specifically, the fifth portion 24 includes the above-described first C-shaped edge surface 24e at its sixth direction DR6 side end.

In the example illustrated in FIG. 5, the fifth portion 24 has a rectangular pipe shape. The fifth portion 24 has a substantially rectangular shape (more specifically, corner-rounded rectangular shape) in a cross section orthogonal to the first direction DR1. The "corner-rounded rectangular shape" is synonymous with the "rectangular shape with corner R". In the example illustrated in FIG. 5, the fifth portion 24 includes four linear portions 25s and four arcuate corner portions 25c in a cross section CP5 orthogonal to the first direction DR1.

In the example illustrated in FIG. 5, the thickness of the fifth portion 24 (in other words, each of the width dimension of the fifth portion 24 and the depth dimension of the fifth portion 24) is constant along the first direction DR1.

As in the example illustrated in FIG. 5, the sixth portion 27 extends from the fourth portion 21 in the sixth direction DR6. The sixth portion 27 includes the above-described second C-shaped edge surface 27e. More specifically, the sixth portion 27 includes the above-described second C-shaped edge surface 27e at its first direction DR1 side end.

In the example illustrated in FIG. 5, the sixth portion 27 has a rectangular pipe shape. The sixth portion 27 has a substantially rectangular shape (more specifically, corner-rounded rectangular shape) in a cross section orthogonal to the first direction DR1. In the example illustrated in FIG. 5, the sixth portion 27 includes four linear portions 28s and four arcuate corner portions 28c in a cross section CP6 orthogonal to the first direction DR1.

In the example illustrated in FIG. 5, the thickness of the sixth portion 27 (in other words, each of the width dimension of sixth portion 27 and the depth dimension of the sixth portion 27) is constant along the first direction DR1.

### (Second Rectangular Pipe 3)

The second rectangular pipe 3 is, for example, a hollow pipe made of metal. In the example illustrated in FIG. 1, the second rectangular pipe 3 has a substantially rectangular shape in a cross section orthogonal to the second direction DR2. The second rectangular pipe 3 may be provided with a through hole portion in which a pin, a bolt, or the like is inserted. Alternatively or additionally, the second rectangular pipe 3 may be provided with an elongated hole or a slit. In the example illustrated in FIG. 1, the second rectangular pipe 3 is a pipe thinner than the first rectangular pipe 2, and the first rectangular pipe 2 is a pipe thicker than the second rectangular pipe 3.

In the example illustrated in FIG. 2, the second rectangular pipe 3 includes the first portion 30 received in the first notch 20 of the first rectangular pipe 2, and the second portion 41 extending in the second direction DR2 from the first portion 30.

Additionally, the second rectangular pipe 3 may include a third portion 46 extending in the fifth direction DR5 from the first portion 30. In the example illustrated in FIG. 4, the width dimension W2 of the first portion 30 of the second rectangular pipe 3 in the direction along the first direction DR1 is smaller than a width dimension W23 of the third portion 46 in a direction along the first direction DR1. Thus, a step is formed at a boundary portion K2 between the first portion 30 and the third portion 46. As in the example illustrated in FIG. 8, the third portion 46 may be omitted. Still, if the third portion 46 is omitted, the first portion 30 is likely to warp. Thus, when the third portion 46 is omitted, a configuration for suppressing the warpage of the first portion 30 is preferably added. Furthermore, a configuration for blocking the opening at the fifth direction DR5 side end portion of the first portion 30 is preferably added.

In the example illustrated in FIG. 10, the second portion 41 of the second rectangular pipe 3 has, in a cross section orthogonal to the second direction DR2, a substantially rectangular shape (more specifically, corner-rounded rectangular shape). More specifically, the second portion 41 of the second rectangular pipe 3 includes, in a cross section orthogonal to the second direction DR2, four linear portions 42s and four arcuate corner portions 42c. Each of the four linear portions 42s defines a side of the corner-rounded rectangular shape, and each of the four arcuate corner portions 42c defines a corner portion of the corner-rounded rectangular shape.

In the example illustrated in FIG. 11, the third portion 46 of the second rectangular pipe 3 has, in a cross section orthogonal to the second direction DR2, a substantially rectangular shape (more specifically, corner-rounded rectangular shape). More specifically, the third portion 46 of the second rectangular pipe 3 includes, in a cross section orthogonal to the second direction DR2, four linear portions 47s and four arcuate corner portions 47c. Each of the four linear portions 47s defines a side of the corner-rounded rectangular shape, and each of the four arcuate corner portions 47c defines a corner portion of the corner-rounded rectangular shape.

In the example illustrated in FIG. 12, the first portion 30 of the second rectangular pipe 3 includes, in a cross section orthogonal to the second direction DR2, only two linear portions 31s. In a cross section orthogonal to the second direction DR2, the two linear portions 31s are parallel to each other. In the example illustrated in FIG. 12, in a cross section orthogonal to the second direction DR2, each of the two linear portions 31s extends in the first direction DR1.

With two linear portions and four arcuate corner portions omitted in the first portion 30, the gap between the first portion 30 of the second rectangular pipe 3 and the first rectangular pipe 2 can be made small.

On the other hand, in Comparative Example illustrated in FIG. 13, the first portion 30 of the second rectangular pipe 3 includes four arcuate corner portions 31c. In this case, a gap GP between the first portion 30 of the second rectangular pipe 3 and the first rectangular pipe 2 is relatively large. The relatively large gap GP leads to unstable quality of the pipe assembly 1.

Assume that, for example, the first portion 30 of the second rectangular pipe 3 and the first rectangular pipe 2 are welded. In this case, the welding quality is stable in an example where the gap is small (see FIG. 12), compared with an example where the gap is relatively large (see FIG. 13).

Furthermore, in an example where the gap is small (see FIG. 12), relatively high rigidity can be achieved at an intersection between the first portion 30 of the second rectangular pipe 3 and the first rectangular pipe 2 (more specifically, rigidity at the intersection after the welding). This means that the area of welding target portions may be small, and that the number of welding target portions may be reduced. Furthermore, when the first portion 30 of the second rectangular pipe 3 and the first rectangular pipe 2 are welded by overlaying, a small amount of material is required for the overlay welding in the example where the gap is small (see FIG. 12).

In the example illustrated in FIG. 3 and FIG. 4, a depth dimension D2 of the first portion 30 of the second rectangular pipe 3 in a direction along the third direction DR3 (see FIG. 4) is substantially the same as the above-described third value V3 (in other words, depth dimension of the first notch 20 of the first rectangular pipe 2).

When the width dimension W2 of the first portion 30 of the second rectangular pipe 3(see FIG. 4), the length dimension L2 of the first portion 30 of the second rectangular pipe 3 (see FIG. 4), and the depth dimension D2 of the first portion 30 of the second rectangular pipe 3 (see FIG. 4) are respectively substantially the same as the above-described first value V1 (see FIG. 3), the above-described second value V2 (see FIG. 3), and the above-described third value V3 (see FIG. 3), an intersection J (see FIG. 1) between the first rectangular pipe 2 and the second rectangular pipe 3 has good appearance. Furthermore, stable quality of the pipe assembly 1 is achieved.

In the example illustrated in FIG. 4, the first portion 30 of the second rectangular pipe 3 includes a first plate portion 35 and a second plate portion 36 disposed opposite to the first plate portion 35. The second plate portion 36 is disposed more on the third direction DR3 side than the first plate portion 35. The first plate portion 35 is parallel to the second plate portion 36. In the example illustrated in FIG. 4, the first portion 30 includes only the first plate portion 35 and the second plate portion 36. Each of the first plate portion 35 and the second plate portion 36 is a flat plate.

In the example illustrated FIG. 1, FIG. 3, and FIG. 4, a width dimension W2p of the first plate portion 35 in a direction along the first direction DR1 (see FIG. 4) is substantially the same as the width dimension (in other words, the first value V1) of the first notch 20 in a direction along the first direction DR1.

In the example illustrated in FIG. 1, an outer surface 3u of the second rectangular pipe 3 on the fourth direction DR4 side (more specifically, the outer surface of the first portion 30 on the fourth direction DR4 side) is substantially flush with an outer surface 2u of the first rectangular pipe 2 on the fourth direction DR4 side.

When the outer surface 3u of the second rectangular pipe 3 on the fourth direction DR4 side is substantially flush with the outer surface 2u of the first rectangular pipe 2 on the fourth direction DR4 side, the intersection J between the first rectangular pipe 2 and the second rectangular pipe 3 has good appearance. Furthermore, stable quality of the pipe assembly 1 is achieved.

Assume that, for example, the outer surface 3u of the second rectangular pipe 3 on the fourth direction DR4 side and the outer surface 2u of the first rectangular pipe 2 on the fourth direction DR4 side are welded. In this case, in the example where the outer surface 3u of the second rectangular pipe 3 is substantially flush with the outer surface 2u of the first rectangular pipe 2 (see FIG. 1), stable welding quality is achieved.

In the example illustrated in FIG. 1, the outer surface 3u of the second rectangular pipe 3 on the fourth direction DR4 side and the outer surface 2u of the first rectangular pipe 2 on the fourth direction DR4 side form a substantially flush surface of a substantially X shape. Alternatively, as in the example illustrated in FIG. 8, the outer surface 3u of the second rectangular pipe 3 on the fourth direction DR4 side and the outer surface 2u of the first rectangular pipe 2 on the fourth direction DR4 side may form a substantially flush surface of a substantially T shape.

Alternatively, as in the example illustrated in FIG. 14, the outer surface 3u of the second rectangular pipe 3 on the fourth direction DR4 side may not be flush with the outer surface 2u of the first rectangular pipe 2 on the fourth direction DR4 side.

In the example illustrated in FIG. 4, the length dimension L2 of the first portion 30 of the second rectangular pipe 3 is larger than the width dimension W2 of the first portion 30 of the second rectangular pipe 3. With the length dimension L2 of the first portion 30 of the second rectangular pipe 3 being larger, the orientation of the second rectangular pipe 3 with respect to the first rectangular pipe 2 is stabilized after the first portion 30 is fit in the first notch 20. Furthermore, when the length dimension L2 of the first portion 30 of the second rectangular pipe 3 is larger, a sufficient boundary between the first portion 30 and the first rectangular pipe 2 is guaranteed. Thus, when the first portion 30 is welded to the first rectangular pipe 2 along the second direction DR2, sufficient joining strength between the first portion 30 and the first rectangular pipe 2 is guaranteed. Still, in an embodiment, the length dimension L2 of the first portion 30 of the second rectangular pipe 3 may be equal to or smaller than the width dimension W2 of the first portion 30 of the second rectangular pipe 3.

In the example illustrated in FIG. 2, the second plate portion 36 is in contact with both of the first linear edge surface 21e of the first rectangular pipe 2 and the second linear edge surface 22e of the first rectangular pipe 2. Due to this contact, the first rectangular pipe 2 and the second rectangular pipe 3 are favorably positioned with each other in a direction parallel to the third direction DR3.

In the example illustrated in FIG. 4, the thickness of the second portion 41 of the second rectangular pipe 3 (in other words, each of the width dimension of the second portion 41 and the depth dimension of the second portion 41) is substantially constant along the second direction DR2. The thickness of the third portion 46 of the second rectangular pipe 3 (in other words, each of the width dimension of the third portion 46 and the depth dimension of the third portion 46) is substantially constant along the second direction DR2.

In the example illustrated in FIG. 9, the depth dimension D2 of the first portion 30 of the second rectangular pipe 3 in a direction along the third direction DR3 is smaller than the depth dimension D1 of the first rectangular pipe 2 in a direction along the third direction DR3.

In the example illustrated in FIG. 9, the depth dimension D22 of the second portion 41 of the second rectangular pipe 3 in a direction along the third direction DR3 is smaller than the depth dimension D1 of the first rectangular pipe 2 in a direction along the third direction DR3. A depth dimension D23 of the third portion 46 of the second rectangular pipe 3 in a direction along the third direction DR3 is smaller than the depth dimension D1 of the first rectangular pipe 2 in a direction along the third direction DR3.

In the example illustrated in FIG. 9, the depth dimension D2 of the first portion 30 of the second rectangular pipe 3 in a direction along the third direction DR3 is the same as the depth dimension D22 of the second portion 41 of the second rectangular pipe 3 in a direction along the third direction DR3. The depth dimension D2 of the first portion 30 of the second rectangular pipe 3 in a direction along the third direction DR3 is the same as the depth dimension D23 of the third portion 46 of the second rectangular pipe 3 in a direction along the third direction DR3.

### (Second Notch 37)

In the example illustrated in FIG. 15, the second rectangular pipe 3 includes a second notch 37.

In the example illustrated in FIG. 16, the second notch 37 is defined by edge surfaces E2 of a first group including a first edge surface 41e of the second portion 41, a first edge surface 35e of the first plate portion 35, and a first edge surface 36e of the second plate portion 36. The edge surfaces E2 of the first group may include a first edge surface 46e of the third portion 46. In other words, the second notch 37 may be defined by the edge surfaces E2 of the first group including the first edge surface 41e of the second portion 41, the first edge surface 35e of the first plate portion 35, the first edge surface 36e of the second plate portion 36, and the first edge surface 46e of the third portion 46.

In the example illustrated in FIG. 17, the second notch 37 receives part of the first rectangular pipe 2. More specifically, the second notch 37 receives part of the plurality of edge surfaces E1 (for example, the first C-shaped edge surface 24e) defining the first notch 20 of the first rectangular pipe 2.

In the example illustrated in FIG. 17, with part of the first rectangular pipe 2 received in the second notch 37, the first rectangular pipe 2 and the second rectangular pipe 3 are favorably positioned in a direction parallel to the second direction DR2.

In the example illustrated in FIG. 4 or FIG. 15, the depth dimension D4 of the second notch 37 in the sixth direction DR6 is larger than the dimension of the corner R of the second rectangular pipe 3. In this case, the first portion 30 includes no corner R portion on the first direction DR1 side. The first notch 20, for example, functions as a main notch that receives the entirety of the first portion 30 of the second rectangular pipe 3. The second notch 37 may, for example, function as an auxiliary notch for positioning.

In the example illustrated in FIG. 16, the first edge surface 41e of the second portion 41 is an edge surface of the second portion 41 on the fifth direction DR5 side. The first edge surface 46e of the third portion 46 is an edge surface of the third portion 46 on the second direction DR2 side.

In the example illustrated in FIG. 17, the first edge surface 41e of the second portion 41 is disposed opposite to the outer circumference surface of the first rectangular pipe 2 (more specifically, the outer circumference surface 24u of the fifth portion 24). The first edge surface 41e of the second portion 41 functions as a stopper surface preventing the second rectangular pipe 3 from moving in the fifth direction DR5. Alternatively or additionally, the first edge surface 41e of the second portion 41 may function as a stopper surface preventing the first rectangular pipe 2 from moving in the second direction DR2.

In the example illustrated in FIG. 17, the first edge surface 46e of the third portion 46 is disposed opposite to the outer circumference surface of the first rectangular pipe 2 (more specifically, the outer circumference surface 24u of the fifth portion 24). The first edge surface 46e of the third portion 46 functions as a stopper surface preventing the second rectangular pipe 3 from moving in the second direction DR2. Alternatively or additionally, the first edge surface 46e of the third portion 46 may function as a stopper surface preventing the first rectangular pipe 2 from moving in the fifth direction DR5.

In the example illustrated in FIG. 17, the first rectangular pipe 2 (more specifically, the fifth portion 24 of the first rectangular pipe 2) is sandwiched by the first edge surface 41e of the second portion 41 and the first edge surface 46e of the third portion 46, whereby the first rectangular pipe 2 and the second rectangular pipe 3 are favorably positioned in a direction parallel to the second direction DR2.

In FIG. 18, the first edge surface 35e of the first plate portion 35, the first edge surface 36e of the second plate portion 36, a second edge surface 35f of the first plate portion 35 described later, and a second edge surface 36f of the second plate portion 36 described later are shown by dot hatching. In FIG. 18, the first C-shaped edge surface 24e of the first rectangular pipe 2 and the second C-shaped edge surface 27e of the first rectangular pipe 2 are shown by diagonal line hatching.

In the example illustrated in FIG. 18, the first edge surface 35e of the first plate portion 35 is an edge surface of the first plate portion 35 on the first direction DR1 side, and the first edge surface 36e of the second plate portion 36 is an edge surface of the second plate portion 36 on the first direction DR1 side. Each of the first edge surface 35e of the first plate portion 35 and the first edge surface 36e of the second plate portion 36 is disposed opposite to the first C-shaped edge surface 24e of the first rectangular pipe 2.

The first edge surface 35e of the first plate portion 35 and the first edge surface 36e of the second plate portion 36 function as stopper surfaces preventing the second rectangular pipe 3 from moving in the first direction DR1.

Most part of the first edge surface 35e of the first plate portion 35 (for example, 90% or more of the area of the first edge surface 35e of the first plate portion 35) may be disposed opposite to the first C-shaped edge surface 24e of the first rectangular pipe 2.

### (Third Notch 38)

In the example illustrated in FIG. 15, the second rectangular pipe 3 includes a third notch 38.

In the example illustrated in FIG. 19, the third notch 38 is defined by edge surfaces E3 of a second group including a second edge surface 41f of the second portion 41, the second edge surface 35f of the first plate portion 35, and the second edge surface 36f of the second plate portion 36. The edge surfaces E3 of the second group may include a second edge surface 46f of the third portion 46. In other words, the third notch 38 may be defined by the edge surfaces E3 of the second group including the second edge surface 41f of the second portion 41, the second edge surface 35f of the first plate portion 35, the second edge surface 36f of the second plate portion 36, and the second edge surface 46f of the third portion 46.

In the example illustrated in FIG. 17, the third notch 38 receives part of the first rectangular pipe 2. More specifically, the third notch 38 receives part of the plurality of edge surfaces E1 (for example, the second C-shaped edge surface 27e) defining the first notch 20 of the first rectangular pipe 2.

In the example illustrated in FIG. 17, with part of the first rectangular pipe 2 received in the third notch 38, the first rectangular pipe 2 and the second rectangular pipe 3 are favorably positioned in a direction parallel to the second direction DR2.

The depth dimension D5 of the third notch 38 in the first direction DR1 (see FIG. 15) is larger than the dimension of the corner R of the second rectangular pipe 3. In the example illustrated in FIG. 19, the first portion 30 includes no corner R portion on the sixth direction DR6 side. The third notch 38 may, for example, function as an auxiliary notch for positioning. In the example illustrated in FIG. 15, the depth dimension D5 of the third notch 38 in the first direction DR1 is substantially the same as the depth dimension D4 of the second notch 37 in the sixth direction DR6.

In the example illustrated in FIG. 19, the second edge surface 41f of the second portion 41 is an edge surface of the second portion 41 on the fifth direction DR5 side. The second edge surface 46f of the third portion 46 is an edge surface of the third portion 46 on the second direction DR2 side.

In the example illustrated in FIG. 17, the second edge surface 41f of the second portion 41 is disposed opposite to the outer circumference surface of the first rectangular pipe 2 (more specifically, the outer circumference surface 27u of the sixth portion 27). The second edge surface 41f of the second portion 41 functions as a stopper surface preventing the second rectangular pipe 3 from moving in the fifth direction DR5. Alternatively or additionally, the second edge surface 41f of the second portion 41 may function as a stopper surface preventing the first rectangular pipe 2 from moving in the second direction DR2.

In the example illustrated in FIG. 17, the second edge surface 46f of the third portion 46 is disposed opposite to the outer circumference surface of the first rectangular pipe 2 (more specifically, the outer circumference surface 27u of the sixth portion 27). The second edge surface 46f of the third portion 46 functions as a stopper surface preventing the second rectangular pipe 3 from moving in the second direction DR2. Alternatively or additionally, the second edge surface 46f of the third portion 46 may function as a stopper surface preventing the first rectangular pipe 2 from moving in the fifth direction DR5.

In the example illustrated in FIG. 17, the first rectangular pipe 2 (more specifically, the sixth portion 27 of the first rectangular pipe 2) is sandwiched by the second edge surface 41f of the second portion 41 and the second edge surface 46f of the third portion 46, whereby the first rectangular pipe 2 and the second rectangular pipe 3 are favorably positioned in a direction parallel to the second direction DR2.

In the example illustrated in FIG. 18, the second edge surface 35f of the first plate portion 35 is an edge surface of the first plate portion 35 on the sixth direction DR6 side. The second edge surface 36f of the second plate portion 36 is an edge surface of the second plate portion 36 on the sixth direction DR6 side. Each of the second edge surface 35f of the first plate portion 35 and the second edge surface 36f of the second plate portion 36 is disposed opposite to the second C-shaped edge surface 27e of the first rectangular pipe 2.

The second edge surface 35f of the first plate portion 35 and the second edge surface 36f of the second plate portion 36 function as stopper surfaces preventing the second rectangular pipe 3 from moving in the sixth direction DR6.

Most part of the second edge surface 35f of the first plate portion 35 (for example, 90% or more of the area of the second edge surface 35f of the first plate portion 35) may be disposed opposite to the second C-shaped edge surface 27e of the first rectangular pipe 2.

In the example illustrated in FIG. 18, the first rectangular pipe 2 includes the first C-shaped edge surface 24e, the second C-shaped edge surface 27e, the first linear edge surface 21e, and the second linear edge surface 22e. In the example illustrated in FIG. 18, the second plate portion 36 is effectively positioned by these four edge surfaces (24e, 27e, 21e, and 22e).

In the example illustrated in FIG. 18, the second plate portion 36 is sandwiched by the first C-shaped edge surface 24e and the second C-shaped edge surface 27e. The second plate portion 36 (more specifically, a main surface 365 of the second plate portion 36 on the third direction DR3 side illustrated in FIG. 12) is disposed opposite to (more specifically, disposed in contact with) the first linear edge surface 21e and second linear edge surface 22e.

FIG. 17 illustrates an example where the second rectangular pipe 3 includes the second notch 37 and the third notch 38. Alternatively, as in the example illustrated in FIG. 20, the third notch may be omitted.

### (Welding Portion T)

In the example illustrated in FIG. 21, the first rectangular pipe 2 and the second rectangular pipe 3 are welded and connected to each other by at least one welding portion T. In FIG. 21, the welding portion T is shown by cross hatching.

In the example illustrated in FIG. 21, the first rectangular pipe 2 and the first portion 30 of the second rectangular pipe 3 (more specifically, a first side edge 351e of the first plate portion 35 of the second rectangular pipe 3 (see FIG. 16)) are welded and connected to each other by the first welding portion T1. The first rectangular pipe 2 and the second portion 41 of the second rectangular pipe 3 (more specifically, an end edge 411e of the second portion 41 on the fifth direction DR5 side (see FIG. 16)) are welded and connected to each other by a second welding portion T2.

With each of the first portion 30 and the second portion 41 welded to the first rectangular pipe 2, the first rectangular pipe 2 and the second rectangular pipe 3 are rigidly connected. Additionally, the first rectangular pipe 2 and the third portion 46 of the second rectangular pipe 3 (more specifically, an end edge 461e of the third portion 46 on the second direction DR2 side (see FIG. 16)) may be welded and connected to each other by a third welding portion T3.

Each of the first welding portion T1, the second welding portion T2, and the third welding portion T3 may be a welding portion of a linear shape, or a welding portion of a spot shape.

In the example illustrated in FIG. 21, the first rectangular pipe 2 and the first portion 30 of the second rectangular pipe 3 (more specifically, a second side edge 352e of the first plate portion 35 of the second rectangular pipe 3 (see FIG. 19)) are welded and connected to each other by a fourth welding portion T4. The first rectangular pipe 2 and the second portion 41 of the second rectangular pipe 3 (more specifically, an end edge 412e of the second portion 41 on the fifth direction DR5 side (see FIG. 19)) are welded and connected to each other by a fifth welding portion T5. Additionally, the first rectangular pipe 2 and the third portion 46 of the second rectangular pipe 3 (more specifically, an end edge 462e of the third portion 46 on the second direction DR2 side (see FIG. 19)) may be welded and connected to each other by a sixth welding portion T6.

As in the example illustrated in FIG. 21, with the first portion 30 welded to the first rectangular pipe 2 by the first welding portion T1 and the fourth welding portion T4, the first portion 30 and the first rectangular pipe 2 are rigidly connected. With the second portion 41 welded to the first rectangular pipe 2 by the second welding portion T2 and the fifth welding portion T5, the second portion 41 and the first rectangular pipe 2 are rigidly connected. With the third portion 46 welded to the first rectangular pipe 2 by the third welding portion T3 and the sixth welding portion T6, the third portion 46 and the first rectangular pipe 2 are rigidly connected.

### (Intersection J)

In the example illustrated in FIG. 1, the first rectangular pipe 2 crosses the second rectangular pipe 3 at a substantially right angle. In other words, the intersection J between the first rectangular pipe 2 and the second rectangular pipe 3 is a right-angle intersection. Alternatively, as in the example illustrated in FIG. 22 to FIG. 24, the first rectangular pipe 2 may cross the second rectangular pipe 3 in an inclined state. In other words, the intersection J between the first rectangular pipe 2 and the second rectangular pipe 3 is a non-right-angle intersection.

In the example illustrated in FIG. 1, the intersection J between the first rectangular pipe 2 and the second rectangular pipe 3 is a substantially X-shaped intersection. Alternatively, as in the example illustrated in FIG. 8, the intersection J between the first rectangular pipe 2 and the second rectangular pipe 3 is a substantially T-shaped intersection.

### (Embodiment 2)

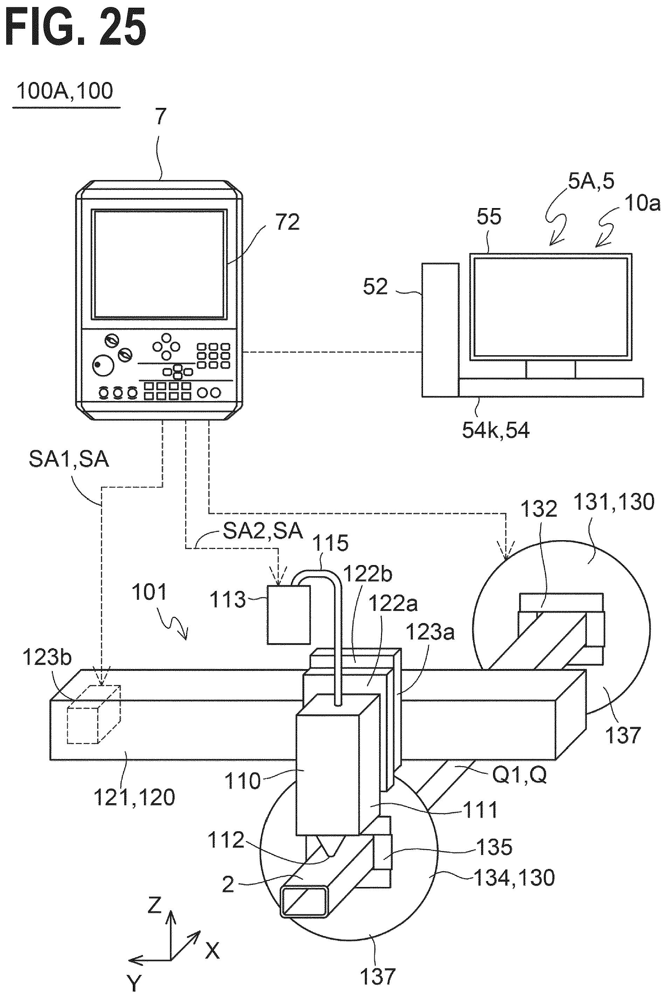

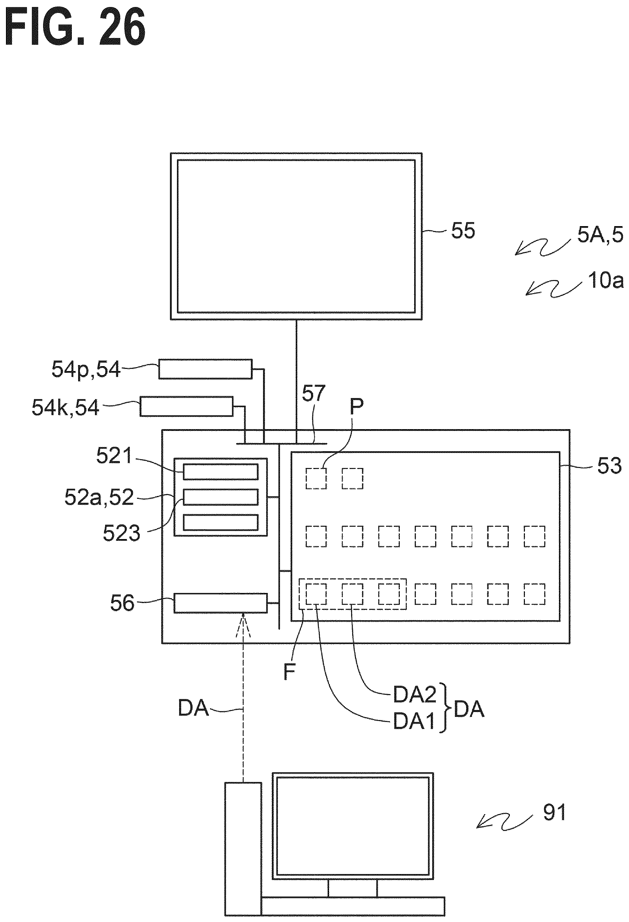

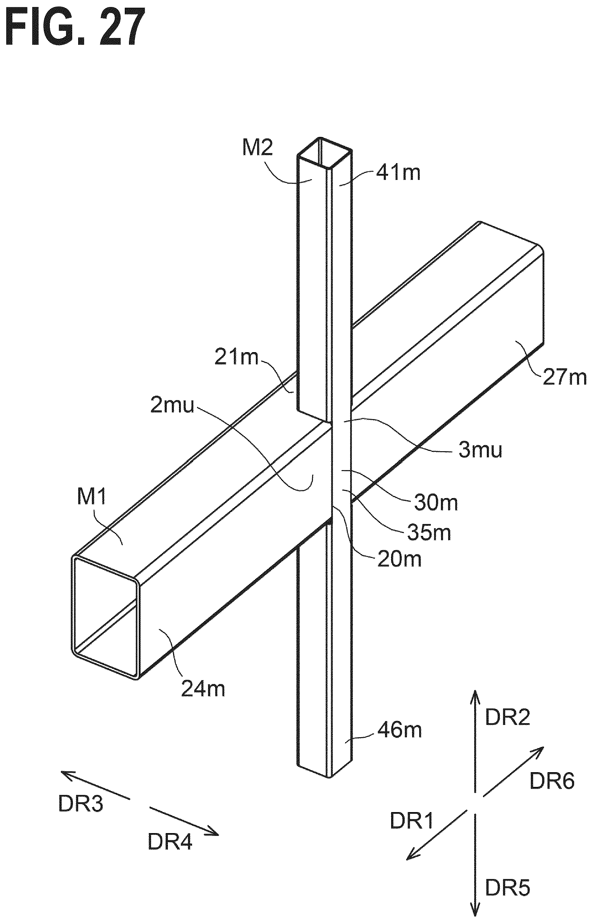

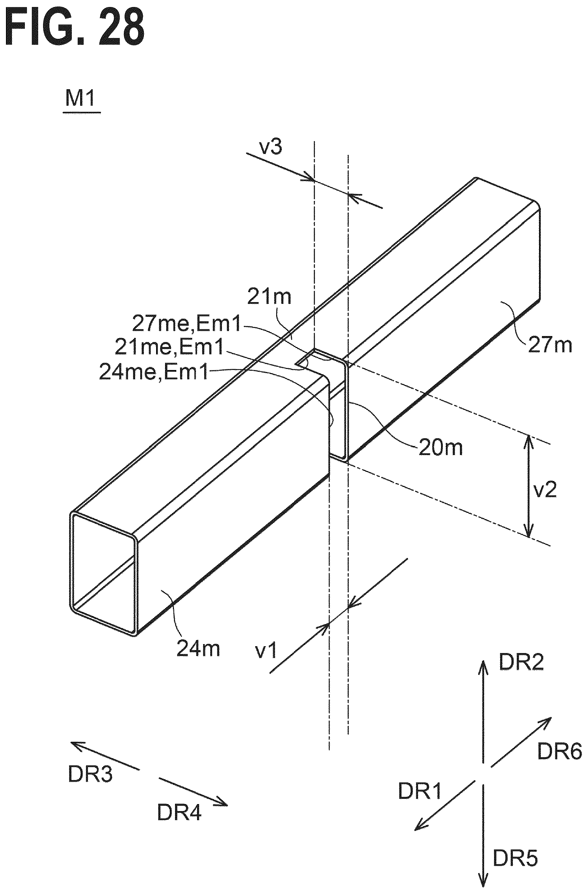

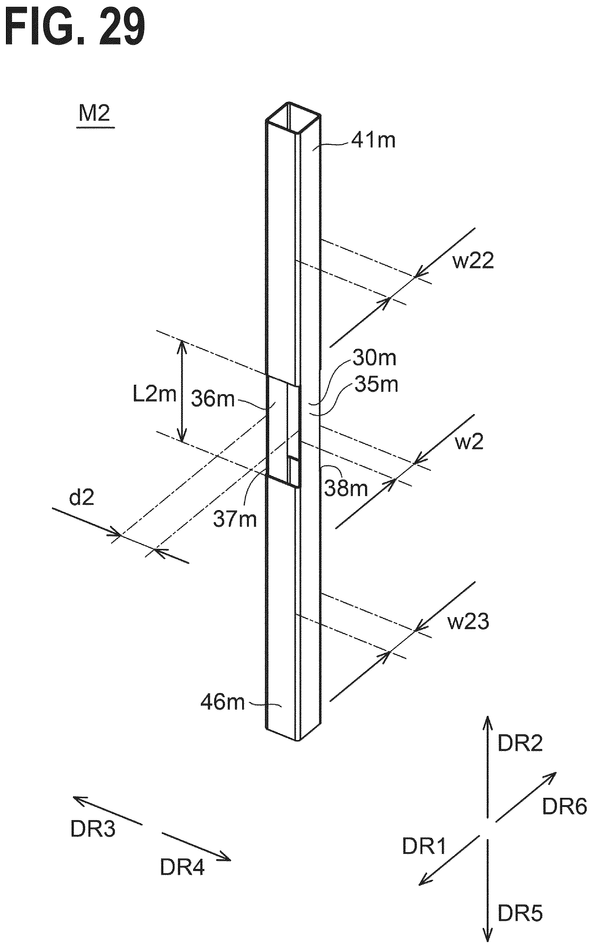

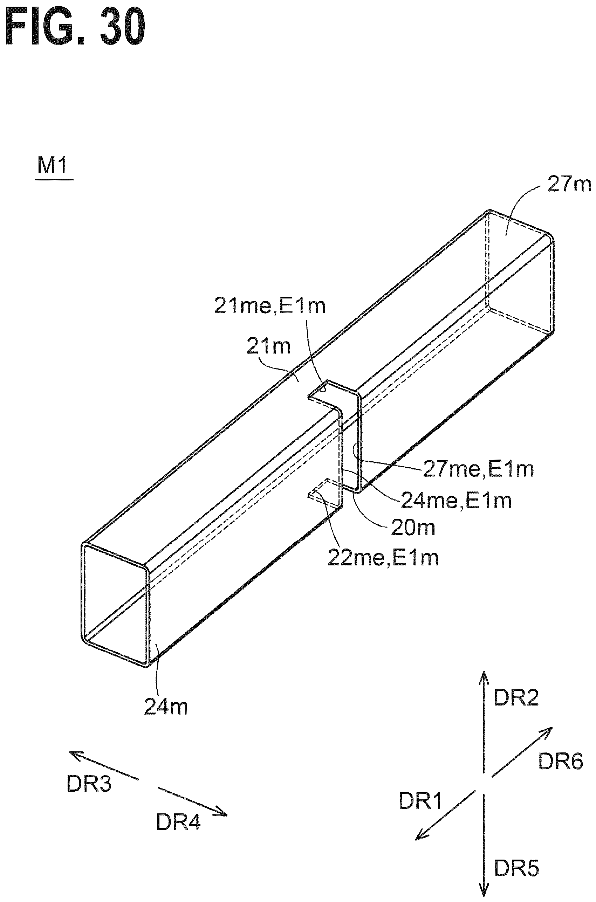

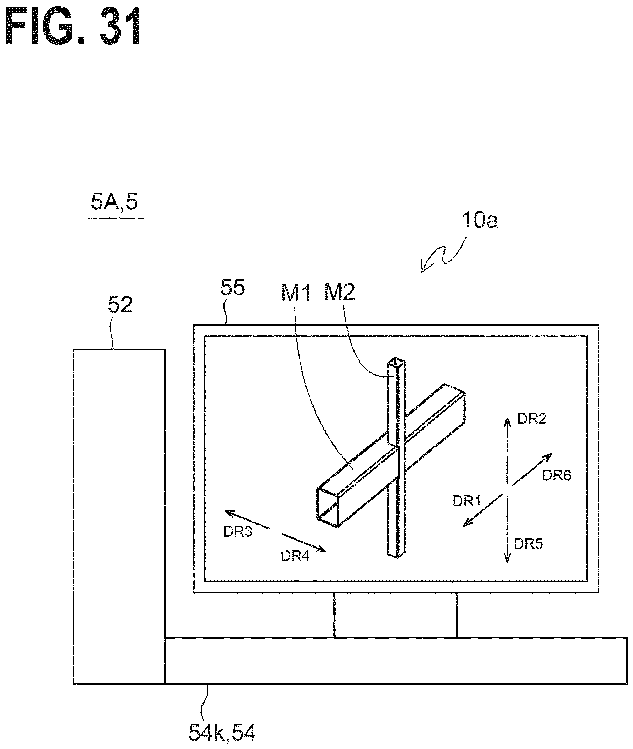

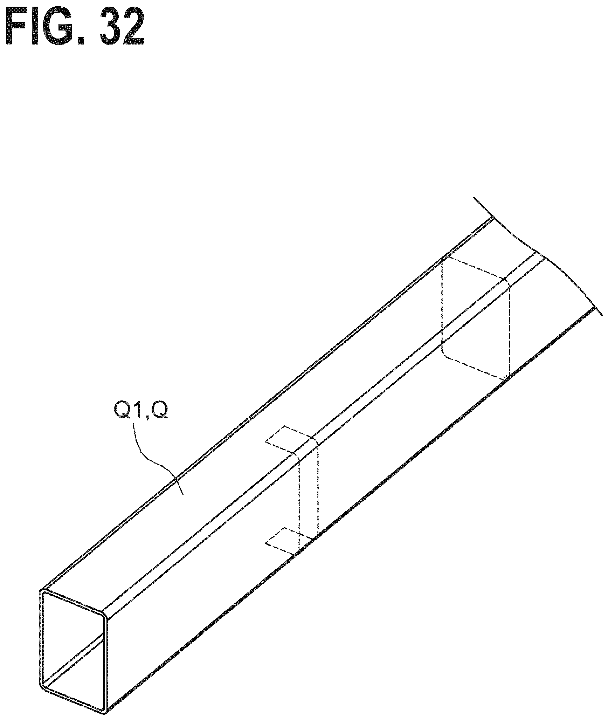

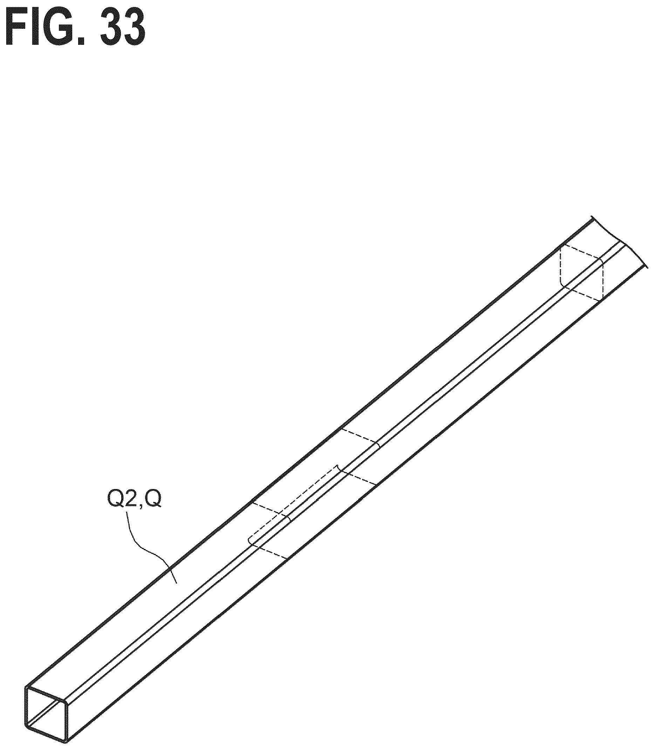

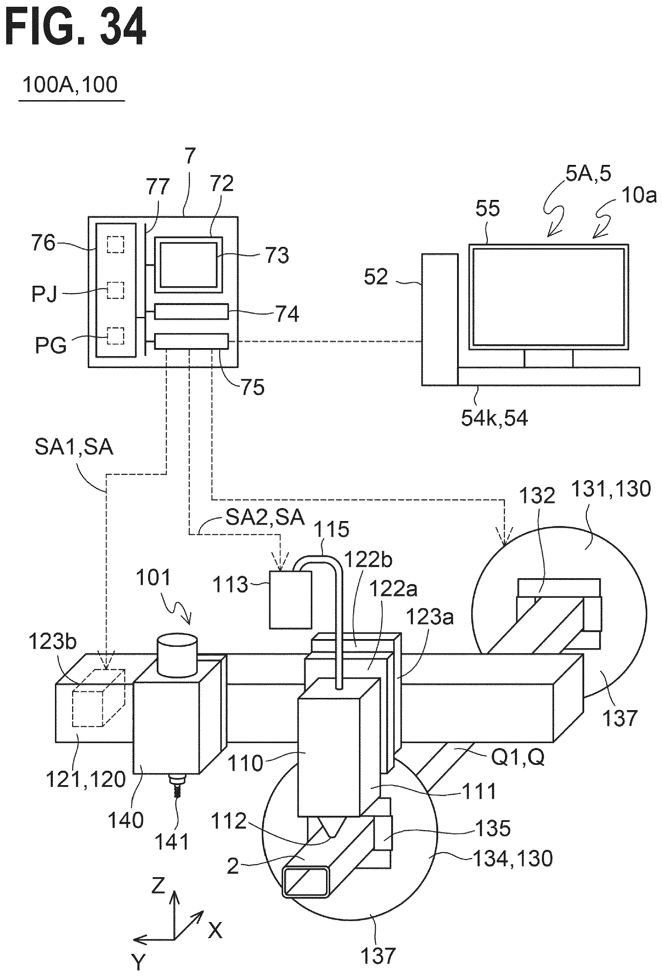

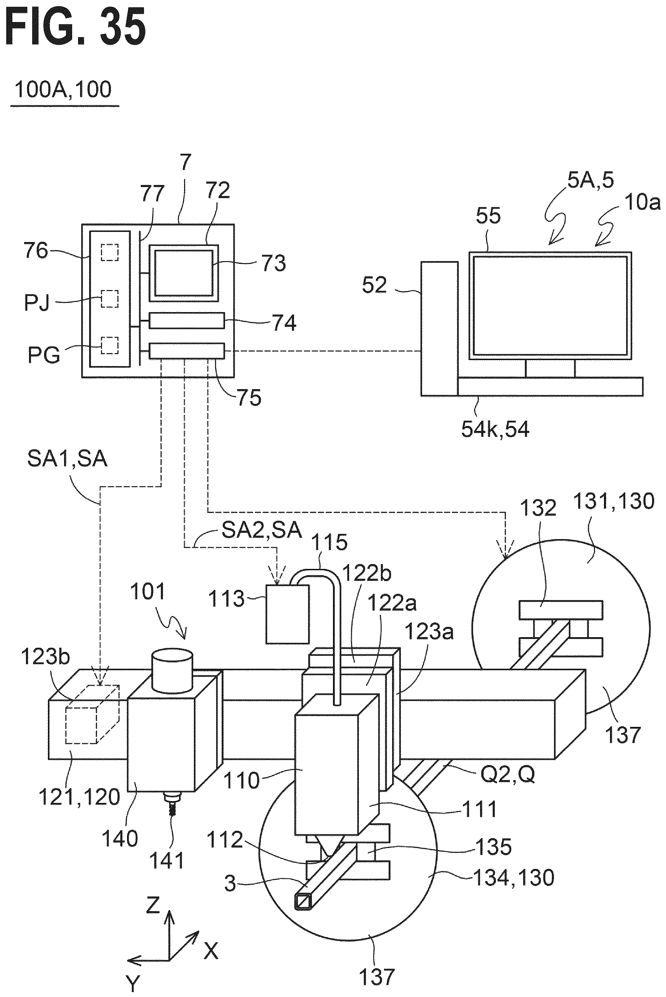

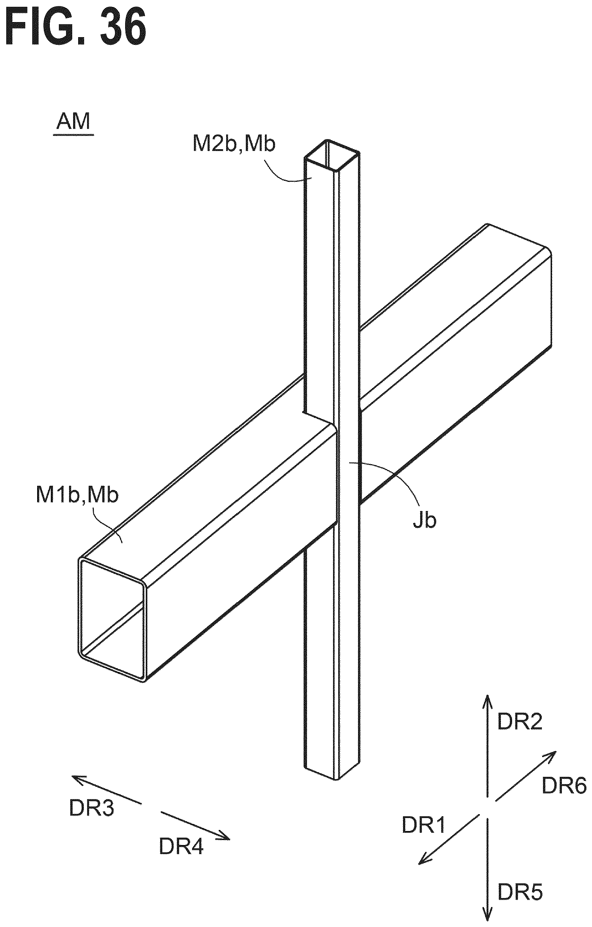

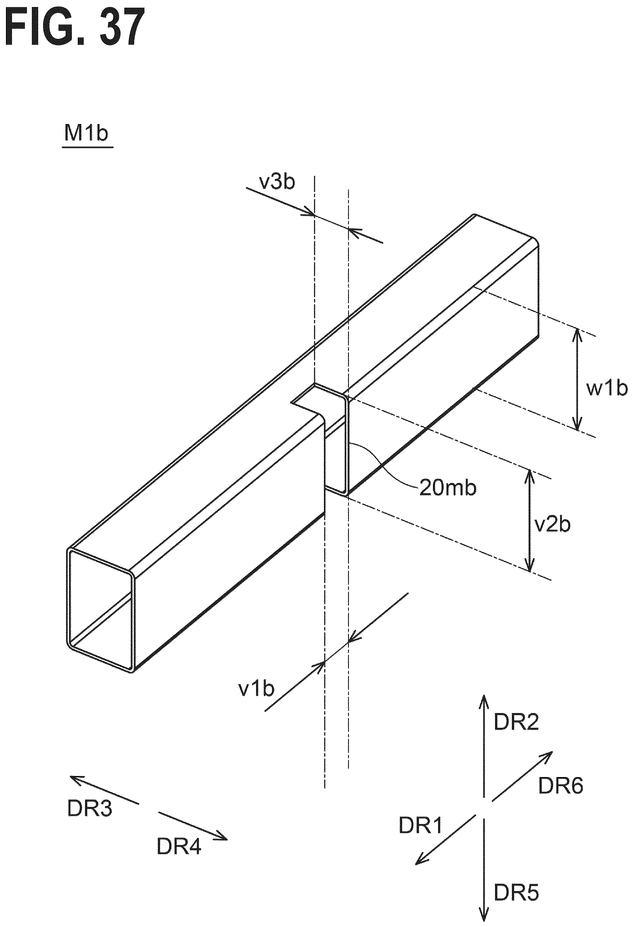

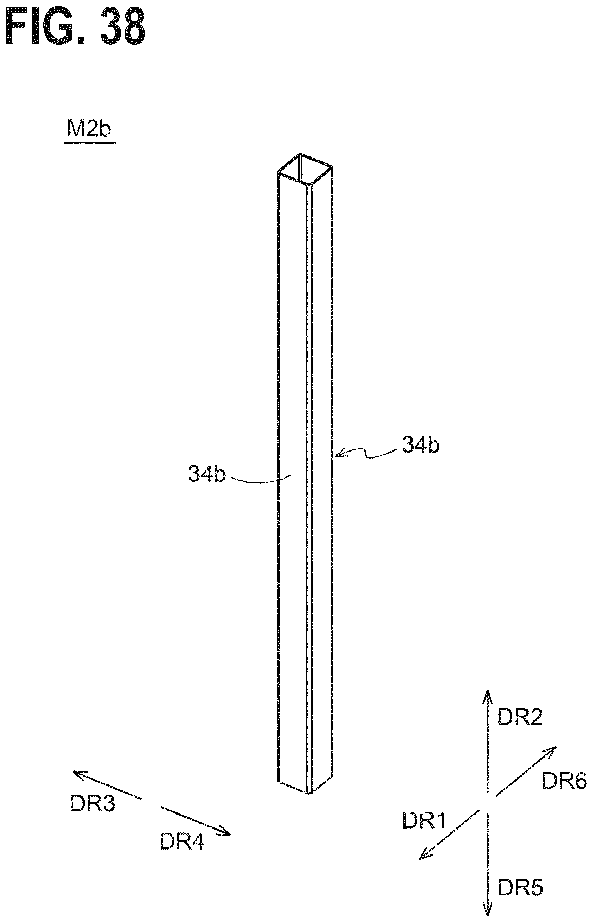

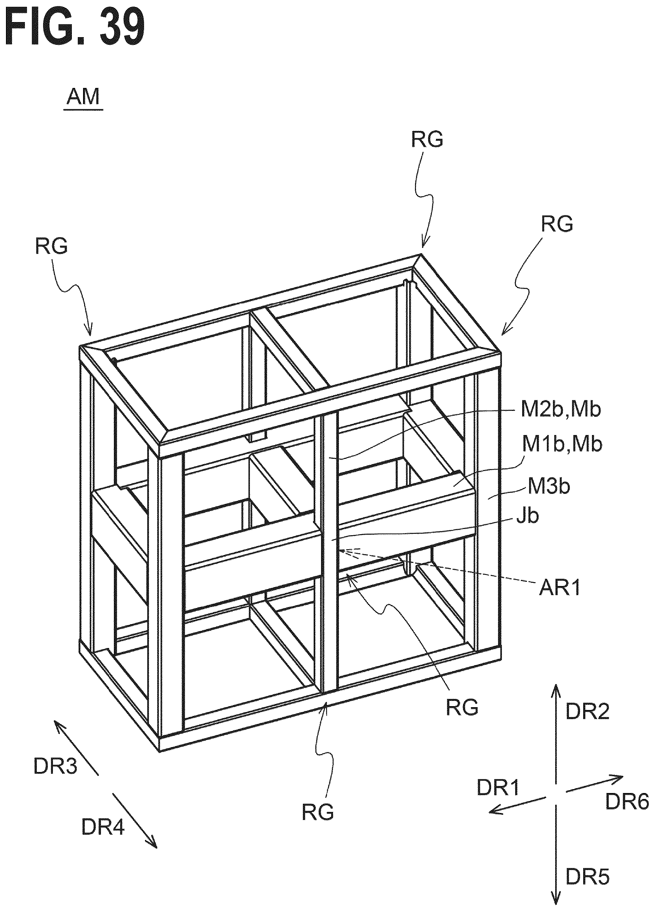

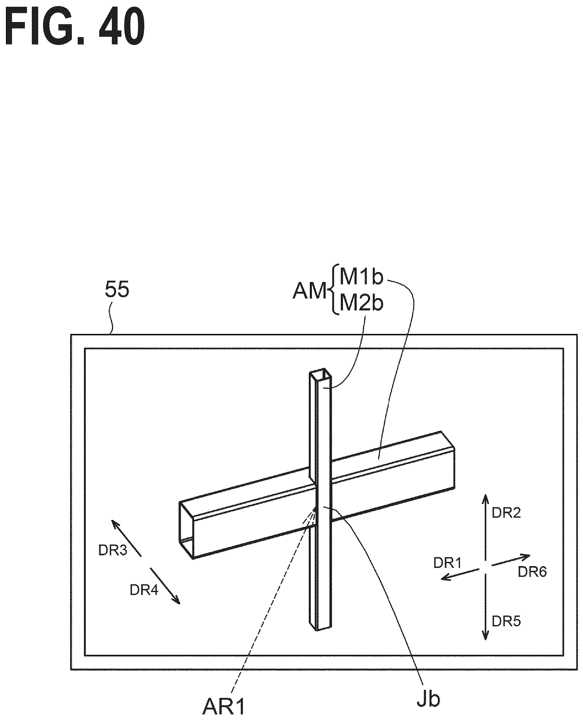

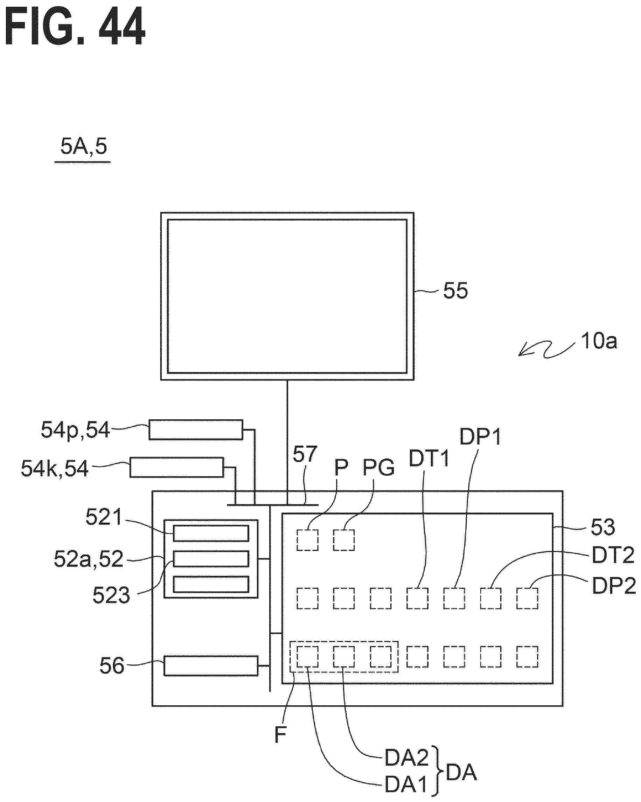

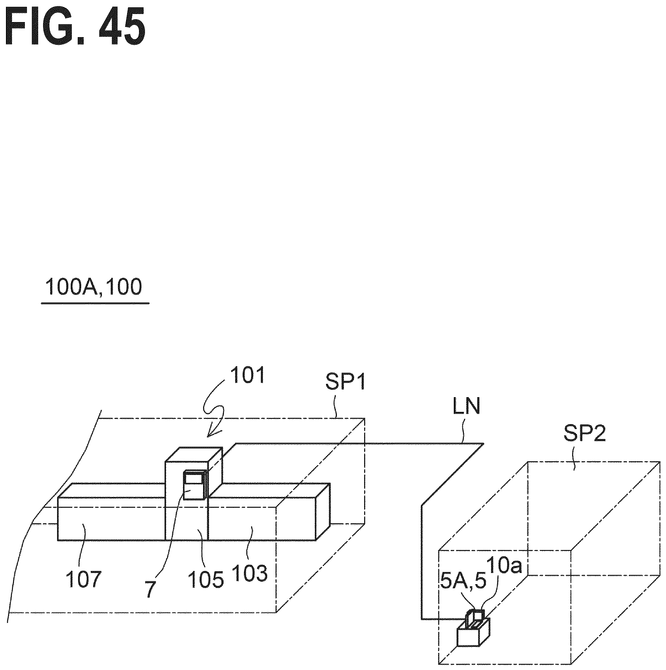

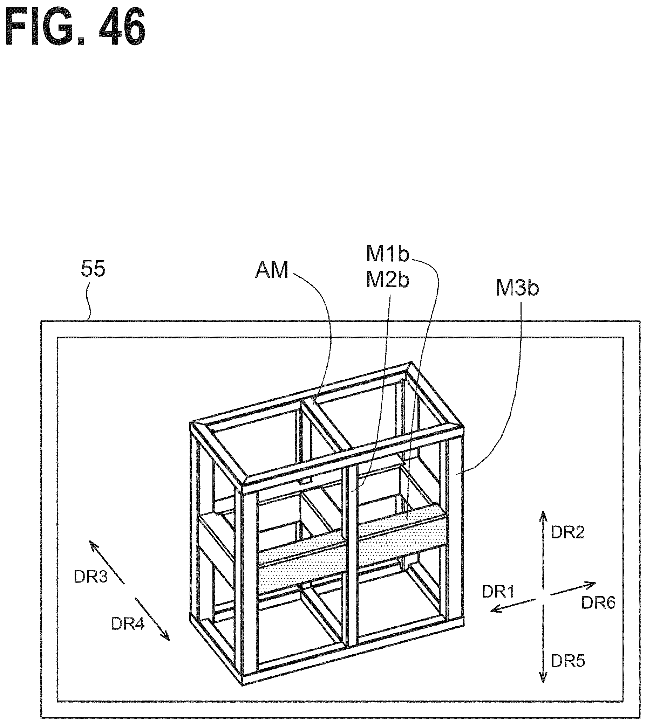

A laser beam machining system 100A according to embodiment 2 will be described with reference to FIG. 1 to FIG. 49. FIG. 25 is a diagram schematically illustrating the laser beam machining system 100A according to embodiment 2. FIG. 26 is a diagram schematically illustrating how a machining path generator 5A receives shape data DA of a plurality of basic models from a CAD device 91. FIG. 27 is a schematic perspective view schematically illustrating a combination of a first pipe model M1 and a second pipe model M2. FIG. 28 is a schematic perspective view schematically illustrating the first pipe model M1. FIG. 29 is a schematic perspective view schematically illustrating the second pipe model M2. FIG. 30 is a schematic perspective view schematically illustrating the first pipe model M1. FIG. 31 is a diagram schematically illustrating an example of the machining path generator 5A. FIG. 32 and FIG. 33 are diagrams schematically illustrating examples of a traveling path of a laser beam. FIG. 34 and FIG. 35 are diagrams schematically illustrating the laser beam machining system 100A according to embodiment 2. FIG. 36 is a schematic perspective view schematically illustrating an assembly model AM that is a combination of a plurality of models including a first basic model M1b and a second basic model M2b. FIG. 37 is a schematic perspective view schematically illustrating the first basic model M1b. FIG. 38 is a schematic perspective view schematically illustrating the second basic model M2b. FIG. 39 is a schematic perspective view schematically illustrating the assembly model AM, which is a combination of a plurality of models including the first basic model M1b and the second basic model M2b FIG. 40 to FIG. 43 are diagrams illustrating examples of an image displayed on a display 55. FIG. 44 is a diagram schematically illustrating an example of the machining path generator 5A. FIG. 45 is a diagram schematically illustrating the laser beam machining system 100A according to embodiment 2. FIG. 46 to FIG. 49 are diagrams illustrating examples of an image displayed on the display 55.

In embodiment 2, points different from embodiment 1 will be mainly described. Meanwhile, redundant description on matters described in embodiment 1 will be omitted in embodiment 2. Thus, it is a matter of course that matters described in embodiment 1 are applicable to embodiment 2 even if such matters are not clearly described in embodiment 2. Conversely, the respects described in embodiment 2 are applicable to embodiment 1.

As in the example illustrated in FIG. 25, the laser beam machining system 100A includes the machining path generator 5A, the controller 7, and the laser beam machine 101.

The machining path generator 5A generates a machining path for producing a rectangular pipe from a pipe material Q. More specifically, the machining path generator 5A generates a machining path for producing a rectangular pipe of a desired shape from the pipe material Q, which is a rectangular pipe material. In this specification, the machining path means a path of a laser beam or a tool machining the pipe material Q.

The controller 7 executes a machining program created based on the machining path, to generate a control command SA, and transmits the generated control command SA to the laser beam machine 101.

The laser beam machine 101 operates based on the control command SA, and irradiates the pipe material Q with a laser beam, to produce the rectangular pipe from the pipe material Q.

In the example illustrated in FIG. 26, the machining path generator 5A (for example, a CAD/CAM device 10a) includes a calculator 52, a memory 53, an inputter 54, the display 55, and a communication circuit 56. The inputter 54 may include a keyboard 54k, may include a pointer 54p such as a mouse, or may include a touch panel that is a display with a touch panel.

The machining path generator 5A executes first processing for creating the first pipe model M1 as a shape model of the first rectangular pipe 2. As in the example illustrated in FIG. 27, the first pipe model M1 has a shape corresponding to the shape of the first rectangular pipe 2. The first rectangular pipe 2 is already described in embodiment 1. Thus, redundant description on the first rectangular pipe 2 will be omitted.

The machining path generator 5A executes second processing of creating the second pipe model M2 as the shape model of the second rectangular pipe 3 to be disposed to cross the first rectangular pipe 2. As in the example illustrated in FIG. 27, the second pipe model M2 has a shape corresponding to the shape of the second rectangular pipe 3. The second rectangular pipe 3 is already described in embodiment 1. Thus, redundant description on the second rectangular pipe 3 will be omitted.

As in the example illustrated in FIG. 28, the first pipe model M1 include a first notch 20m and extends in the first direction DR1.

As in the example illustrated in FIG. 28, the width dimension of the first notch 20m in a direction along the first direction DR1 is defined as a first value v1. As in the example illustrated in FIG. 28, the length dimension of the first notch 20m in a direction along the second direction DR2 is defined as a second value v2. In the example illustrated in FIG. 27 to FIG. 29, the second direction DR2 is a direction substantially orthogonal to the first direction DR1. Alternatively, the second direction DR2 may be a direction inclined with respect to the first direction DR1.

As in the example illustrated in FIG. 28, the depth dimension of the first notch 20m in a direction along the third direction DR3 is defined as a third value v3. In other words, the depth dimension of the first notch 20m in a direction along the third direction DR3 is of the third value v3. In the example illustrated in FIG. 27 to FIG. 29, the third direction DR3 is a direction substantially orthogonal to the first direction DR1. The third direction DR3 is a direction substantially orthogonal to the second direction DR2.

As in the example illustrated in FIG. 27, the second pipe model M2 includes a first portion 30m and a second portion 41m. As in the example illustrated in FIG. 27, the first portion 30m is received in the first notch 20m of the first pipe model M1. The second portion 41m extends in the second direction DR2 from the first portion 30m.

In the example illustrated in FIG. 27, the extending direction (in other words, second direction DR2) of the second pipe model M2 is a direction substantially orthogonal to the extending direction (in other words, first direction DR1) of the first pipe model M1. Alternatively, the extending direction of the second pipe model M2 may be a direction inclined with respect to the extending direction of the first pipe model M1.

As in the example illustrated in FIG. 29, the second processing includes creating the second pipe model M2 with the width dimension w2 of the first portion 30m in the direction along the first direction DR1 being smaller than the width dimension w22 of the second portion 41m in the direction along the first direction DR1. More specifically, the second processing includes creating the second pipe model M2 including a second notch 37m, and/or a third notch 38m with the width dimension w2 of the first portion 30m in the direction along the first direction DR1 being smaller than the width dimension w22 of the second portion 41m in the direction along the first direction DR1.

As in the example illustrated in FIG. 28 and FIG. 29, the second processing includes creating the second pipe model M2 with a length dimension L2m of the first portion 30m in the direction along the second direction DR2 (see FIG. 29) being substantially the same as the second value v2 (see FIG. 28). More specifically, the second processing includes creating the second pipe model M2 including the second notch 37m with the length dimension in the direction along the second direction DR2 being substantially the same as the second value v2.

As in the example illustrated in FIG. 28 and FIG. 29, the first processing includes creating the first pipe model M1 with the first value v1 (see FIG. 28) being substantially the same as the width dimension w2 of the first portion 30m in the direction along the first direction DR1 (see FIG. 29).

FIG. 31 illustrates a state where the first pipe model M1 and the second pipe model M2 created by the first processing and the second processing executed, are displayed on the display 55. The second processing may be executed before the first processing, executed after the first processing, or executed in parallel with the first processing.

The machining path generator 5A (more specifically, the calculator 52) stores three-dimensional shape data DT1 of the first pipe model M1 created by the first processing executed and three-dimensional shape data DT2 of the second pipe model M2 created by the second processing executed, in the memory 53 (see FIG. 44).

The machining path generator 5A (more specifically, the calculator 52) executes third processing of generating a first machining path for producing the first rectangular pipe 2 from a first pipe material Q1 based on the three-dimensional shape data DT1 of the first pipe model M1. The machining path generator 5A (more specifically, the calculator 52) executes fourth processing of generating a second machining path for producing the second rectangular pipe 3 from a second pipe material Q2 based on the three-dimensional shape data DT2 of the second pipe model M2. Any known algorithm can be adopted for an algorithm for generating a machining path based on three-dimensional shape data.

In the example illustrated in FIG. 32, the first machining path is set to make a laser beam emitted from the laser beam machine 101 travel on a line indicated by the dashed line. In the example illustrated in FIG. 33, the second machining path is set to make a laser beam emitted from the laser beam machine 101 travel on a line indicated by the dashed line.

The first machining path means a path of a laser beam or a tool for machining the first pipe material Q1 to produce the first rectangular pipe 2 from the first pipe material Q1 (for example, a path of a laser head 111 moving relative to the first pipe material Q1 to produce the first rectangular pipe 2 from the first pipe material Q1). As in the example illustrated in FIG. 34, when the laser beam machine 101 includes a machining head 140 holding a tool such as a machining tool 141, the first machining path may include both a path of the laser beam for machining the first pipe material Q1 and a path of the tool such as the machining tool 141 for machining the first pipe material Q1. The machining path generator 5A (more specifically, the calculator 52) stores first machining path data DP1 indicating the generated first machining path in the memory 53 (see FIG. 44).

The second machining path means a path of a laser beam or a tool for machining the second pipe material Q2 to produce the second rectangular pipe 3 from the second pipe material Q2 (for example, a path of the laser head 111 moving relative to the second pipe material Q2 to produce the second rectangular pipe 3 from the second pipe material Q2). As in the example illustrated in FIG. 35, when the laser beam machine 101 includes the machining head 140 holding a tool such as the machining tool 141, the second machining path may include both a path of the laser beam for machining the second pipe material Q2 and a path of the tool such as the machining tool 141 for machining the second pipe material Q2. The machining path generator 5A (more specifically, the calculator 52) stores second machining path data DP2 indicating the generated second machining path in the memory 53 (see FIG. 44).

The machining path generator 5A or the controller 7 creates at least one machining program PG based at least on the first machining path and the second machining path. The controller 7 executes the at least one machining program PG to generate the control command SA. The controller 7 transmits the generated control command SA to the laser beam machine 101 (see FIG. 34 and FIG. 35).

The laser beam machine 101 operates based on the control command SA. The laser beam machine 101 irradiates the first pipe material Q1 with a laser beam to produce the first rectangular pipe 2 from the first pipe material Q1 (see FIG. 34). The laser beam machine 101 irradiates the second pipe material Q2 with a laser beam to produce the second rectangular pipe 3 from the second pipe material Q2 (see FIG. 34).

The laser beam machining system 100A according to embodiment 2 can efficiently produce two rectangular pipes (2 and 3) that can be easily positioned to each other. More specifically, the laser beam machining system 100A according to embodiment 2 can efficiently produce the first rectangular pipe 2 and the second rectangular pipe 3 forming the pipe assembly 1 according to embodiment 1.

### (Optional Configurations)

Next, optional configurations that can be adopted for the laser beam machining system 100A according to embodiment 2 will be described with reference to FIG. 1 to FIG. 49.

### (First Pipe Model M1 and Second Pipe Model M2)

The first pipe model M1 has a shape corresponding to the shape of the first rectangular pipe 2, and the second pipe model M2 has a shape corresponding to the shape of the second rectangular pipe 3. Thus, by replacing the "pipe assembly", the "first rectangular pipe", and the "second rectangular pipe" in the description of embodiment 1 respectively with the "pipe assembly model", the "first pipe model", and the "second pipe model", the description of embodiment 1 is regarded as a description on the first pipe model M1 and the second pipe model M2.

For example, through the above-described replacement in the description related to FIG. 9, it can be understood that the depth dimension (D22) of the second portion (41) of the second pipe model M2 in a direction along the third direction DR3 is smaller than the depth dimension (D1) of the first pipe model M1 in a direction along the third direction DR3.

For example, through the above-described replacement in the description related to FIG. 10, it can be understood that the second portion (41) of the second pipe model M2 includes four linear portions (42s) and four arcuate corner portions (42c) in a cross section orthogonal to the second direction DR2. Through the above-described replacement in the description related to FIG. 12, it can be understood that the first portion (30) of the second pipe model M2 includes only two linear portions (31s) in a cross section orthogonal to the second direction DR2.

For example, through the above-described replacement in the description related to FIG. 15 to FIG. 17, it can be understood that the first portion (30) of the second pipe model M2 includes the first plate portion (35) and the second plate portion (36) disposed opposite to the first plate portion (35). Furthermore, it can be understood that the second pipe model M2 includes the second notch (37) defined by the edge surfaces (E2) of the first group including the first edge surface (41e) of the second portion (41), the first edge surface (35e) of the first plate portion (35), and the first edge surface (36e) of the second plate portion (36). Furthermore, it can be understood that part of the first pipe model M1 is received in the second notch (37).

In the example illustrated in FIG. 27, with a direction opposite to the third direction DR3 defined as the fourth direction DR4, an outer surface 3mu of the second pipe model M2 (more specifically, the outer surface 3mu of the first portion 30m of the second pipe model M2 on the fourth direction DR4 side) is substantially flush with an outer surface 2mu of the first pipe model M1 on the fourth direction DR4 side.

In the example illustrated in FIG. 28 and FIG. 29, with the depth dimension of the first notch 20m in a direction along the third direction DR3 defined as the third value v3, the depth dimension d2 of the first portion 30m in the direction along the third direction DR3 (see FIG. 29) is substantially the same as the third value v3.

In the example illustrated in FIG. 29, with a direction opposite to the second direction DR2 defined as the fifth direction DR5, the second pipe model M2 includes a third portion 46m extending in the fifth direction DR5 from the first portion 30m. The width dimension w2 of the first portion 30m in the direction along the first direction DR1 is smaller than the width dimension w23 of the third portion 46m in the direction along the first direction DR1.

In the example illustrated in FIG. 30, the first pipe model M1 includes a fourth portion 21m, a fifth portion 24m, and a sixth portion 27m.

In the example illustrated in FIG. 30, the fourth portion 21m has a substantially C-shape in a cross section orthogonal to the first direction DR1. The fourth portion 21m includes a first linear edge surface 21me and a second linear edge surface 22me.

The fifth portion 24m extends from the fourth portion 21m in the first direction DR1. In the example illustrated in FIG. 30, the fifth portion 24m has a substantially rectangular shape (more specifically, corner-rounded rectangular shape) in a cross section orthogonal to the first direction DR1. The fifth portion 24m includes a first C-shaped edge surface 24me.

The sixth portion 27m extends from the fourth portion 21m in the sixth direction DR6. In the example illustrated in FIG. 30, the sixth portion 27m has a substantially rectangular shape (more specifically, corner-rounded rectangular shape) in a cross section orthogonal to the first direction DR1. The sixth portion 27m includes a second C-shaped edge surface 27me.

In the example illustrated in FIG. 30, the first pipe model M1 includes the first C-shaped edge surface 24me, the second C-shaped edge surface 27me, the first linear edge surface 21me, and the second linear edge surface 22me. The first notch 20m is defined by a plurality of edge surfaces E1m including the first C-shaped edge surface 24me, the second C-shaped edge surface 27me, the first linear edge surface 21me, and the second linear edge surface 22me.

In the example illustrated in FIG. 29 and FIG. 30, the first portion 30m (more specifically, second plate portion 36m) of the second pipe model M2 is sandwiched by the first C-shaped edge surface 24me and the second C-shaped edge surface 27me. The first portion 30m (more specifically, second plate portion 36m) of the second pipe model M2 is disposed opposite to the first linear edge surface 21me and the second linear edge surface 22me.

### (Machining Path Generator 5A)

The machining path generator 5A includes at least one computer. The machining path generator 5A may include the CAD/CAM device 10a. Note that CAD is an abbreviation for "computer aided design" and CAM is an abbreviation for "computer aided manufacturing". The CAD/CAM device 10a is capable of creating a parts drawing, and of generating a machining path (for example, the first machining path, the second machining path) based on the created parts drawing.

In the example illustrated in FIG. 26, the machining path generator 5A (for example, the CAD/CAM device 10a) includes the calculator 52, the memory 53, the inputter 54, the display 55, and the communication circuit 56.

The calculator 52 includes at least one processor 52a (for example, at least one CPU). In the example illustrated in FIG. 26, the machining path generator 5A (more specifically, the calculator 52) executes the program P stored in the memory 53 to cause the calculator 52 to function as a shape data creation unit 521 that executes the above-described first processing and the above-described second processing and as a machining path generation unit 523 that executes the above-described third processing and the above-described fourth processing.

The memory 53 is a storage medium readable by the calculator 52. The memory 53 may be, for example, a non-volatile or volatile semiconductor memory such as a RAM, a ROM, or a flash memory, may be a magnetic disk, or may be a memory of another format. The memory 53 stores the program P and data.

The memory 53 may be dispersedly arranged at a plurality of locations. For example, a memory storing data and a memory storing the program P may be separately provided. The memory 53 may include a cloud storage accessible over a network.

The inputter 54 may include the keyboard 54k, may include the pointer 54p such as a mouse, and may include other devices (a touch panel on the display 55, for example).

In the example illustrated in FIG. 26, the calculator 52, the memory 53, the inputter 54, the display 55, and the communication circuit 56 are connected to each other via a bus 57.

In the example illustrated in FIG. 26, the machining path generator 5A is a device different from the controller 7. Alternatively, the controller 7 may function as the machining path generator 5A. Still alternatively, the CAD/CAM device 10a and the controller 7 may cooperate to function as the machining path generator 5A, and the CAD/CAM device 10a and the CAD device 91 described below may cooperate to function as the machining path generator 5A. The CAD/CAM device 10a, the controller 7, and the CAD device 91 may cooperate to function as the machining path generator 5A.

### (Preparation Processing)

As in the example illustrated in FIG. 36, the machining path generator 5A (more specifically, the calculator 52) may execute preparation processing of preparing the assembly model AM, which is a combination of a plurality of models including the first basic model M1b, which is a basic shape model of the first rectangular pipe 2, and the second basic model M2b, which is a basic shape model of the second rectangular pipe 3.

As in the example illustrated in FIG. 37, the first basic model M1b has a shape corresponding to the basic shape of the first rectangular pipe 2. The first basic model M1b includes a basic notch 20mb that receives part of the second basic model M2b. In the example illustrated in FIG. 37, a width dimension v1b of the basic notch 20mb in a direction along the first direction DR1 is larger than the above-described first value v1 (see FIG. 28). A length dimension v2b of the basic notch 20mb in a direction along the first direction DR1 is the same as the above-described second value v2 (see FIG. 28). A depth dimension v3b of the basic notch 20mb in a direction along the third direction DR3 is the same as the above-described third value v3 (see FIG. 28).

The first basic model M1b is obtained by modeling the basic shape of the first rectangular pipe 2. For example, the length dimension of the first basic model M1b in a direction along the first direction DR1 corresponds to the length dimension of the first rectangular pipe 2 in a direction along the first direction DR1. For example, the width dimension of the first basic model M1b in a direction along the second direction DR2 corresponds to the width dimension of the first rectangular pipe 2 in a direction along the second direction DR2. For example, the depth dimension of the first basic model M1b in a direction along the third direction DR3 corresponds to the depth dimension of the first rectangular pipe 2 in a direction along the third direction DR3.

The second basic model M2b has a shape corresponding to the basic shape of the second rectangular pipe 3. The second basic model M2b is partially received in the basic notch 20mb of the first basic model M1b. In a state where the second basic model M2b is partially received in the basic notch 20mb of the first basic model M1b, the second basic model M2b crosses the first basic model M1b (see FIG. 36).

The second basic model M2b is obtained by modeling the basic shape of the second rectangular pipe 3. For example, the length dimension of the second basic model M2b in a direction along the second direction DR2 corresponds to the length dimension of the second rectangular pipe 3 in a direction along the second direction DR2. For example, the width dimension of the second basic model M2b in a direction along the first direction DR1 corresponds to the width dimension of the second rectangular pipe 3 in a direction along the first direction DR1. For example, the depth dimension of the second basic model M2b in a direction along the third direction DR3 corresponds to the depth dimension of the second rectangular pipe 3 in a direction along the third direction DR3.

As in the example illustrated in FIG. 39, the assembly model AM prepared by the preparation processing may include a model different from the first basic model M1b or the second basic model M2b.

The preparation processing includes, for example, reading the shape data DA of a plurality of basic models Mb by the calculator 52. More specifically, the preparation processing includes reading a file F including the shape data DA of the plurality of basic models Mb from the memory 53, by the calculator 52 executing the program P stored in the memory 53. Alternatively or additionally, the preparation processing may include displaying the plurality of basic models Mb on the display 55 by the calculator 52 (see FIG. 40). Alternatively or additionally, the preparation processing may include creating the plurality of basic models Mb using software (for example, CAD software) executed by the calculator 52.

The shape data DA of the plurality of basic models Mb includes shape data DA1 of the first basic model M1b and shape data DA2 of the second basic model M2b. Additionally, the shape data DA of the plurality of basic models Mb may include shape data of a third basic model M3b (see FIG. 39).

In the example illustrated in FIG. 26, the shape data DA of the plurality of basic models Mb (more specifically, the shape data DA1 of the first basic model M1b and the shape data DA2 of the second basic model M2b) is stored in the memory 53.

The shape data DA of the plurality of basic models Mb may be created by the CAD device 91 different from the machining path generator 5A. In this case, as in the example illustrated in FIG. 26, the machining path generator 5A receives the shape data DA of the plurality of basic models Mb from the CAD device 91. The machining path generator 5A stores the received shape data DA of the plurality of basic models Mb in the memory 53. Alternatively, the machining path generator 5A may receive the shape data DA of the plurality of basic models Mb from a portable memory such as a USB memory, and store the received shape data DA of the plurality of basic models Mb in the memory 53.

Alternatively, the shape data DA of the plurality of basic models Mb may be created by the machining path generator 5A. For example, the plurality of basic models Mb may be created using software (for example, CAD software) executed by the calculator 52. The created shape data DA of the plurality of basic models Mb is stored in the memory 53.

### (First Display Processing)

As in the example illustrated in FIG. 40 or FIG. 46, the calculator 52 (more specifically, the shape data creation unit 521) may execute processing (hereinafter, referred to as "first display processing") of displaying the assembly model AM, which is a combination of a plurality of models including the above-described first basic model M1b and the above-described second basic model M2b, on the display 55. The first display processing is one mode of the above-described preparation processing. The first display processing includes displaying the above-described assembly model AM on the display 55 by the calculator 52 executing the program P stored in the memory 53.

### (First Processing and Second Processing)

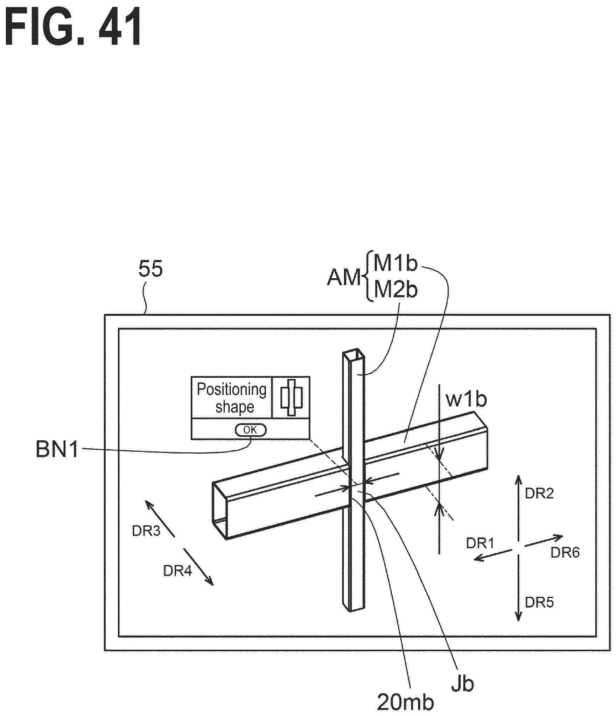

In the example illustrated in FIG. 41 and FIG. 42 or FIG. 47 and FIG. 48, the first processing (in other words, processing of creating the first pipe model M1) includes creating the first pipe model M1 from the first basic model M1b by correcting the shape of the first basic model M1b. The second processing (in other words, processing of creating the second pipe model M2) includes creating the second pipe model M2 from the second basic model M2b by correcting the shape of the second basic model M2b.

The first processing and the second processing are executed by the calculator 52 (more specifically, the shape data creation unit 521).

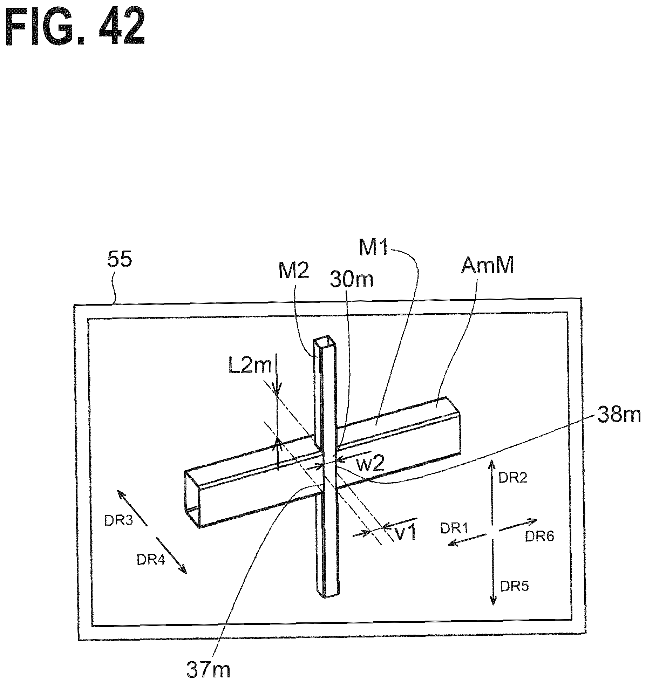

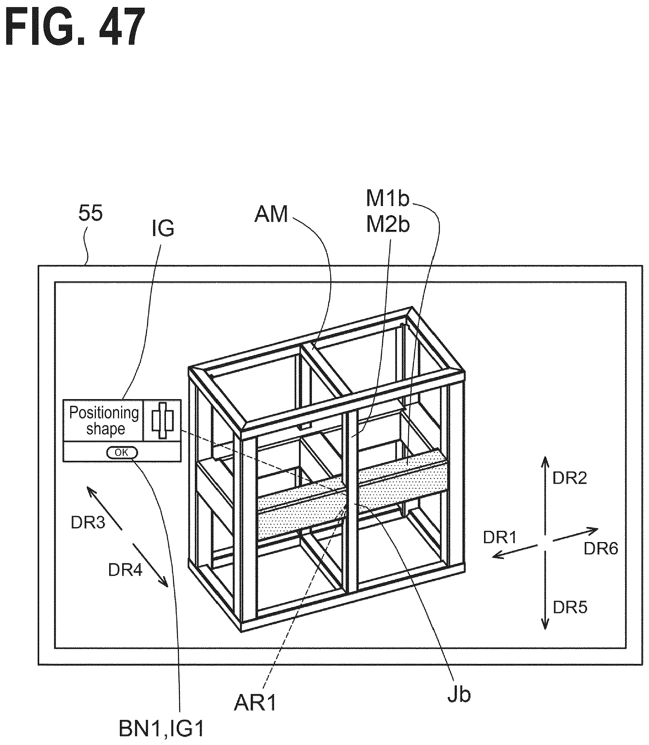

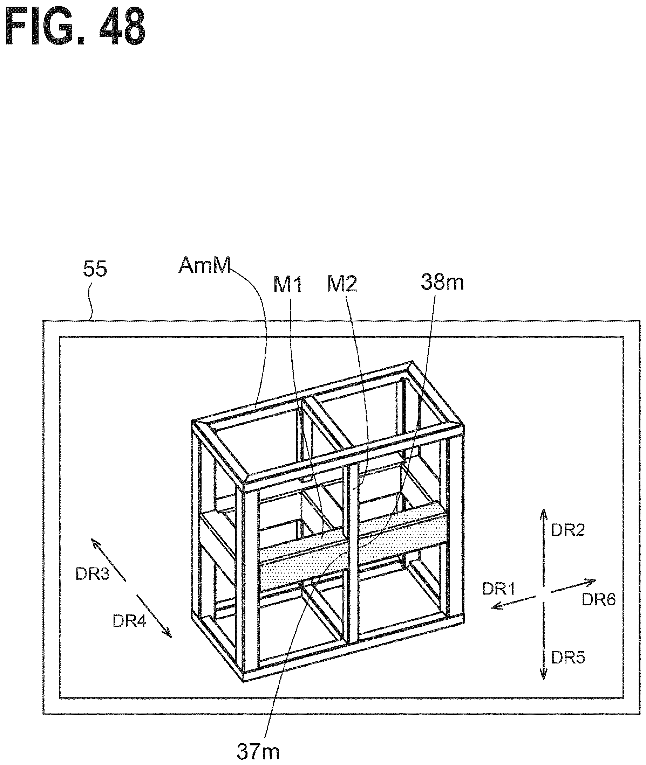

FIG. 42 or FIG. 48 illustrates the first pipe model M1 created from the first basic model M1b (see FIG. 41 or FIG. 47) in response to the execution of the first processing and displayed on the display 55. Furthermore, FIG. 42 or FIG. 48 illustrates the second pipe model M2 created from the second basic model M2b (see FIG. 41 or FIG. 47) in response to the execution of the second processing and displayed on the display 55.

In the example illustrated in FIG. 41 and FIG. 42, the second processing (in other words, the processing of creating the second pipe model M2) includes automatically determining, by the calculator 52, the length dimension L2m of the first portion 30m in a direction along the second direction DR2 to set the length dimension L2m of the first portion 30m in the direction along the second direction DR2 (see FIG. 42) to be substantially the same as a width dimension w1b of the first basic model M1b in a direction along the second direction DR2 (see FIG. 41).

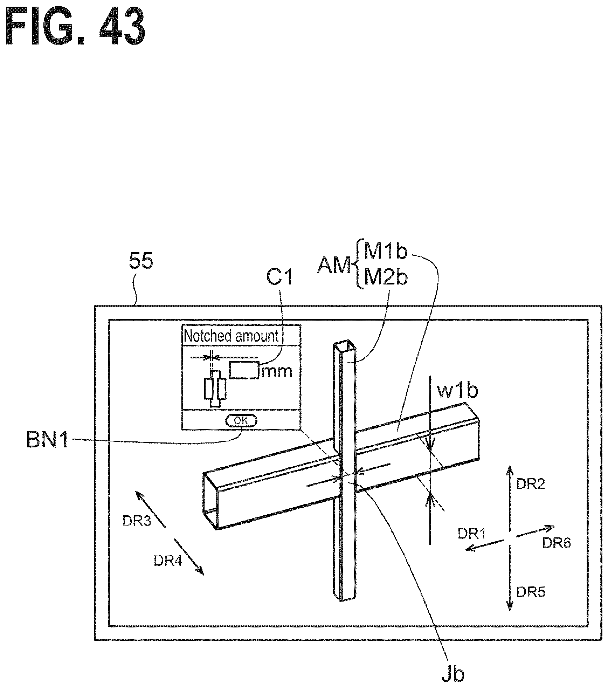

The second processing (in other words, the processing of creating the second pipe model M2) may include automatically determining, by the calculator 52, the width dimension w2 of the first portion 30m in the direction along the first direction DR1 (see FIG. 42). Alternatively, as in the example illustrated in FIG. 43, the calculator 52 may determine the width dimension w2 of the first portion 30m based on the user input performed on the inputter 54. In the example illustrated in FIG. 43, the calculator 52 causes an input window C1 on which the depth dimension (in other words, notched amount) of the second notch 37m is input to be displayed on the display 55. In this case, the calculator 52 determines the width dimension w2 of the first portion 30m based on a numerical value input on the input window C1. The calculator 52 may cause a recommended value (for example, a value registered in advance by the user) for the depth dimension of the second notch 37m to be displayed on the display 55. In this case, the user can input on the inputter 54, the depth dimension of the second notch 37m to the calculator 52, while referring to the recommended value.

In the example illustrated in FIG. 41 and FIG. 42, the calculator 52 executing the program P creates the second pipe model M2 from the second basic model M2b by executing processing including forming in the second basic model M2b, the second notch 37m (see FIG. 29) that can receive one (more specifically, the first C-shaped edge surface 24me) of a plurality of edge surfaces Em1 (see FIG. 28) defining the first notch 20m.

More specifically, in the example illustrated in FIG. 41 and FIG. 42, the calculator 52 executing the program P creates the second pipe model M2 from the second basic model M2b by executing processing including forming in the second basic model M2b, the second notch 37m (see FIG. 29) that can receive one (more specifically, the first C-shaped edge surface 24me) of the plurality of edge surfaces Em1 (see FIG. 28) defining the first notch 20m, and forming in the second basic model M2b, the third notch 38m (see FIG. 29) that can receive another (more specifically, the second C-shaped edge surface 27me) of the plurality of edge surfaces Em1 (see FIG. 28) defining the first notch 20m.

In the example illustrated in FIG. 41 and FIG. 42, forming the second notch 37m and the third notch 38m in the second basic model M2b by the calculator 52 includes removing two plate portions 34b (see FIG. 38) from the second basic model M2b at an intersection Jb between the first basic model M1b and the second basic model M2b by the calculator 52. As a result of removing the two plate portions 34b, the second notch 37m and the third notch 38m (see FIG. 29) are formed.

In the example illustrated in FIG. 41 and FIG. 42, the first processing (in other words, processing of creating the first pipe model M1) includes creating the first pipe model M1 from the first basic model M1b, by reducing the width dimension of the basic notch 20mb (see FIG. 41) in the first direction DR1 by the calculator 52 to set the above-described first value v1 (see FIG. 42) to be substantially the same as the width dimension w2 (see FIG. 42) of the first portion 30m in the direction along the first direction DR1.

In the example illustrated in FIG. 42, the calculator 52 executing the program P automatically determines the above-described first value v1 to set the above-described first value v1 to be substantially the same as the width dimension w2, based on the width dimension w2 of the first portion 30m in the direction along the first direction DR1.

In the example illustrated in FIG. 41 and FIG. 42, after the formation of the second notch in the second basic model M2b at the intersection Jb between the first basic model M1b and the second basic model M2b is approved using the inputter 4 (for example, after a first button BN1 displayed on the display 55 is clicked using the pointer 54p), the calculator 52 creates the second pipe model M2 from the second basic model M2b by automatically forming the second notch 37m and/or the third notch 38m in the second basic model M2b, based on the width dimension w1b of the first basic model M1b.

In the example illustrated in FIG. 41 and FIG. 42, after the formation of the second notch in the second basic model M2b at the above-described intersection Jb is approved using the inputter 4, the calculator 52 creates the first pipe model M1 from the first basic model M1b by automatically reducing the width dimension of the basic notch 20mb in the first direction DR1, based on the above-described width dimension w2 of the first portion 30m.

In FIG. 40 or FIG. 47, a configuration may be employed in which the formation of the second notch in the second basic model M2b at the intersection Jb can be approved after the intersection Jb (see a dashed-line arrow AR1) between the first pipe model M1 and the second pipe model M2 displayed on the display 55 is designated by the user using the inputter 54 such as the pointer 54p.

### (Controller 7)

The controller 7 controls the laser beam machine 101. In the example illustrated in FIG. 34, the controller 7 includes a display 72, an inputter 73 (for example, a touch panel on the display 72), a calculator 74, a communication circuit 75, and a memory 76. In the example illustrated in FIG. 34, the memory 76 stores at least one machining program PG created based at least on the first machining path and the second machining path.

The controller 7 (more specifically, the calculator 74) generates the control command SA by executing the at least one machining program PG. In this specification, execution of the at least one machining program PG by the controller 7 (more specifically, the calculator 74) includes execution of the at least one machining program PG by the controller 7 (more specifically, the calculator 74) via a calculation program PJ. In other words, the controller 7 (more specifically, the calculator 74) may execute the calculation program PJ to process (in other words, interpret) the at least one machining program PG.

In the example illustrated in FIG. 34, the display 72, the inputter 73, the calculator 74, the communication circuit 75, and the memory 76 are connected to each other via a bus 77.

The laser beam machine 101 operates based on the control command SA generated as a result of execution of the at least one machining program PG by the controller 7 (more specifically, the calculator 74). More specifically, the communication circuit 75 transmits the control command SA to the laser beam machine 101, and the laser beam machine 101 receiving the control command SA operates based on the control command SA. The control command SA includes a plurality of commands such as a movement command SA1 causing movement of the laser head 111 and an emission command SA2 causing emission of a laser beam from the laser head 111.

### (Laser Beam Machine 101)

In the example illustrated in FIG. 34, the laser beam machine 101 includes a laser beam emitter 110 including the laser head 111, a mover 120, and a workpiece supporter 130.

In the example illustrated in FIG. 34, the workpiece supporter 130 includes a first chuck 131 and a second chuck 134. The first chuck 131 and the second chuck 134 support the pipe material Q (for example, the first pipe material Q1).

The first chuck 131 may include a holding component 132 capable of holding the pipe material Q (for example, the first pipe material Q1). The first chuck 131 may be movable in a direction parallel to the X axis together with the pipe material Q (for example, the first pipe material Q1). In the example illustrated in FIG. 34, the X axis is an axis parallel to the longitudinal direction of the pipe material Q (for example, the first pipe material Q1) held by the first chuck 131.

The second chuck 134 may include a plurality of guide rollers 135 for clamping the pipe material Q (for example, the first pipe material Q1). The plurality of guide rollers 135 guide the movement of the pipe material Q (for example, the first pipe material Q1) in the direction parallel to the X axis.

In the example illustrated in FIG. 34, the workpiece supporter 130 may include a rotational driver 137 causing rotation of the pipe material Q (for example, the first pipe material Q1) about the axis parallel to the longitudinal direction of the pipe material.

The mover 120 moves the laser head 111 relative to the workpiece supporter 130.

In the example illustrated in FIG. 34, the mover 120 includes a first mover 121 for moving the laser head 111. The mover 120 may include a workpiece mover for moving the pipe material Q (for example, the first pipe material Q1) (more specifically, a motor for moving the pipe material in a direction parallel to the X axis).

In the example illustrated in FIG. 34, the first mover 121 includes moving bodies (122a; 123a) for supporting the laser head 111 and drivers (122b; 123b) for moving the moving bodies (122a; 123a).

The first mover 121 may include the first moving body 122a and the first driver 122b for moving the first moving body 122a in a direction parallel to the Z axis. In the example illustrated in FIG. 34, the first moving body 122a can directly or indirectly support the laser head 111 and move in the direction parallel to the Z axis together with the laser head 111. The Z axis is an axis orthogonal to the X axis. In the example illustrated in FIG. 34, the Z axis is an axis parallel to the vertical direction.

The first mover 121 may include the second moving body 123a and the second driver 123b for moving the second moving body 123a in a direction parallel to the Y axis. In the example illustrated in FIG. 34, the second moving body 123a can directly or indirectly support the laser head 111 and move in the direction parallel to the Y axis together with the laser head 111. The Y axis is an axis orthogonal to both the X axis and the Z axis. In the example illustrated in FIG. 34, the Y axis is an axis parallel to the horizonal plane.

The laser beam emitter 110 includes the laser head 111, a laser beam light source 113, and an optical component 115 (such as, for example, an optical fiber) through which the laser beam is transmitted from the laser beam light source 113 to the laser head 111. The laser head 111 includes a laser beam emission port 112 through which a laser beam is emitted.

As in the example illustrated in FIG. 45, the laser beam machine 101 may include a carry-in part 103, a laser beam machining unit 105, and a carry-out part 107. The pipe material Q (for example, the first pipe material Q1) carried into the carry-in part 103 is conveyed to the laser beam machining unit 105 by a mover such as the workpiece mover. A member such as the first rectangular pipe 2 produced from the pipe material Q (for example, the first pipe material Q1) is conveyed to the carry-out part 107 from the laser beam machining unit 105 by any conveyance device such as a conveyer.

### (Laser Beam Machining System 100A)

In the example illustrated in FIG. 45, the laser beam machining system 100A includes the machining path generator 5A (more specifically, the CAD/CAM device 10a), the controller 7, and the laser beam machine 101. In the example illustrated in FIG. 45, the machining path generator 5A (more specifically, the CAD/CAM device 10a) and the controller 7 are connected through a wire LN or wirelessly, to be capable of exchanging information.

The machining path generator 5A generates the first machining path and the second machining path described above. The machining path generator 5A may create at least one machining program PG based at least on the first machining path and the second machining path. In the example illustrated in FIG. 45, the machining path generator 5A can transmit at least one machining program PG to the controller 7 through the wire LN or wirelessly. The controller 7 stores at least one machining program PG received from the machining path generator 5A in the memory 76. Alternatively, the controller 7 may create at least one machining program PG based at least on the first machining path and the second machining path. In this case, the first machining path and the second machining path generated by the machining path generator 5A may be transmitted to the controller 7 through the wire LN or wirelessly, and the controller 7 may create at least one machining program PG based at least on the first machining path and the second machining path. The at least one machining program PG created is stored in the memory 76.

Alternatively, information may be exchanged between the machining path generator 5A and the controller 7 using a portable memory (for example, a USB memory).

In the example illustrated in FIG. 45, the controller 7 is disposed at a location where the laser beam machine 101 is disposed. More specifically, the controller 7 and the laser beam machine 101 are disposed in the same work room SP1. The controller 7 may be attached to the laser beam machine 101 (for example, an outer wall of the laser beam machine 101). In the example illustrated in FIG. 45, the machining path generator 5A is disposed in a room (more specifically, office space SP2) different form the work room SP1, where the laser beam machine 101 is disposed.

### (Embodiment 3)

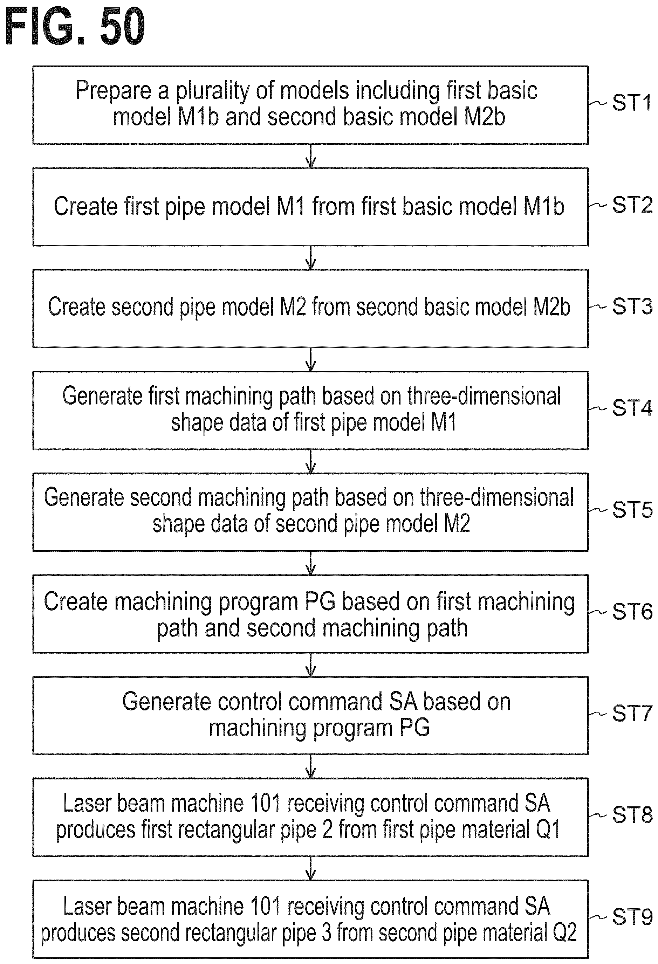

A machining path generation method and a laser beam machining method according to embodiment 3 will be described with reference to FIG. 1 to FIG. 50. FIG. 50 is a flowchart illustrating an example of the laser beam machining method according to embodiment 3.

In embodiment 3, points different from embodiment 1 and embodiment 2 will be mainly described. Meanwhile, redundant description on matters described in embodiment 1 or embodiment 2 will be omitted in embodiment 3. Thus, it is a matter of course that matters described in embodiment 1 or embodiment 2 are applicable to embodiment 3 even if such matters are not clearly described in embodiment 3. Conversely, the respects described in embodiment 3 are applicable to embodiment 1 and embodiment 2.

The machining path generation method according to embodiment 3 may be performed using the machining path generator 5A (for example, the CAD/CAM device 10a) or the laser beam machining system 100A in embodiment 2 or may be performed using other machining path generators or laser beam machining systems.

In a first step ST1, the assembly model AM is prepared. The first step ST1 is a preparation process. In the example illustrated in FIG. 36 or FIG. 39, the assembly model AM prepared in the preparation process is a model that is a combination of a plurality of models including the first basic model M1b, which is the basic shape model of the first rectangular pipe 2, and the second basic model M2b, which is the basic shape model of the second rectangular pipe 3.

The preparation process (first step ST1) includes, for example, reading the shape data DA of the plurality of basic models Mb by the machining path generator 5 (for example, the CAD/CAM device 10a). More specifically, the preparation process (first step ST1) includes reading the file F including the shape data DA of the plurality of basic models Mb from the memory 53 by the machining path generator 5 (more specifically, the calculator 52), which executes the program P stored in the memory 53.

Alternatively or additionally, the preparation process (first step ST1) may include displaying the assembly model AM on the display 55 by the calculator 52 as in the example illustrated in FIG. 40 or FIG. 46. Alternatively or additionally, the preparation process (first step ST1) may include creating the plurality of basic models Mb including the first basic model M1b and the second basic model M2b using software (for example, CAD software) executed by the calculator 52.

The preparation process (first step ST1) is performed by the machining path generator 5 (more specifically, the calculator 52) executing the program P, for example.

The first basic model M1b and the second basic model M2b are already described in embodiment 2. Thus, redundant description on the first basic model M1b and the second basic model M2b will be omitted.

In a second step ST2, the first pipe model M1 is created as the shape model of the first rectangular pipe 2. The second step ST2 is a first pipe model creation process.

As in the example illustrated in FIG. 28, the first pipe model M1 includes the first notch 20m having the width dimension in a direction along the first direction DR1 of the first value v1, and having the length dimension in a direction along the second direction DR2 of the second value v2. In the example illustrated in FIG. 28, the depth dimension of the first notch 20m in a direction along the third direction DR3 is of the third value v3. In the example illustrated in FIG. 28, the first pipe model M1 extends in the first direction DR1.

The first pipe model creation process (second step ST2) is performed by the machining path generator 5 (more specifically, the calculator 52) executing the program P, for example.

The first pipe model creation process (second step ST2) may include storing the three-dimensional shape data DT1 of the first pipe model M1 created by the machining path generator 5 (more specifically, the calculator 52) in the memory 53 (see FIG. 44).

The first pipe model M1 is already described in embodiment 2. Thus, redundant description on the first pipe model M1 will be omitted.

In the third step ST3, the second pipe model M2 is created as the shape model of the second rectangular pipe 3 to be disposed to cross the first rectangular pipe 2. The third step ST3 is a second pipe model creation process.

As in the example illustrated in FIG. 29, the second pipe model M2 includes the first portion 30m received in the first notch 20m, and the second portion 41m extending in the second direction DR2 from the first portion 30m.

As in the example illustrated in FIG. 29, the width dimension w2 of the first portion 30m in the direction along the first direction DR1 is smaller than the width dimension w22 of the second portion 41m in the direction along the first direction DR1.

In the example illustrated in FIG. 29, the second pipe model M2 includes the third portion 46m extending in the fifth direction DR5 (in other words, the direction opposite to the second direction DR2) from the first portion 30m. In the example illustrated in FIG. 29, the width dimension w2 of the first portion 30m in the direction along the first direction DR1 is smaller than the width dimension w23 of the third portion 46m in the direction along the first direction DR1.

As can be recognized in FIG. 27 to FIG. 29, the length dimension L2m of the first portion 30m in the direction along the second direction DR2 (see FIG. 29) is substantially the same as the above-described second value v2 (see FIG. 28), and the width dimension w2 of the first portion 30m in the direction along the first direction DR1 (see FIG. 29) is substantially the same as the above-described first value v1 (see FIG. 28). Additionally, the depth dimension d2 of the first portion 30m in the direction along the third direction DR3 (see FIG. 29) may be substantially the same as the above-described third value v3 (see FIG. 28).

The second pipe model creation process (third step ST3) is performed by the machining path generator 5 (more specifically, the calculator 52) executing the program P, for example.

The second pipe model creation process (third step ST3) may include storing, in the memory 53, the three-dimensional shape data DT2 of the second pipe model M2 created by the machining path generator 5 (more specifically, the calculator 52) (see FIG. 44).

The second pipe model M2 is already described in embodiment 2. Thus, redundant description on the second pipe model M2 will be omitted.

The third step ST3 may be executed before the second step ST2 is executed, after the second step ST2 is executed, or in parallel with the second step ST2.

In the example illustrated in FIG. 41 and FIG. 42 or FIG. 47 and FIG. 48, the first pipe model M1 is created by correcting the shape of the first basic model M1b, and the second pipe model M2 is created by correcting the shape of the second basic model M2b. Alternatively, the first pipe model M1 and the second pipe model M2 may be directly created without creating the first basic model M1b and the second basic model M2b. In this case, the first step ST1 (preparation process) may be omitted.

In a fourth step ST4, the first machining path for producing the first rectangular pipe 2 from the first pipe material Q1 is generated. The fourth step ST4 is a first machining path generation process.

The first machining path generation process (fourth step ST4) includes generating the first machining path for producing the first rectangular pipe 2 from the first pipe material Q1 based on the three-dimensional shape data of the first pipe model M1. The first machining path is already described in embodiment 2. Thus, redundant description on the first machining path will be omitted.

The first machining path generation process (fourth step ST4) may be automatically performed by the machining path generator 5 (more specifically, the calculator 52) executing the program P. More specifically, the first machining path generation process (fourth step ST4) may include automatically generating the first machining path for producing the first rectangular pipe 2 by the calculator 52 based on the three-dimensional shape data DT1 of the first pipe model M1.

The first machining path generation process (fourth step ST4) may include storing, in the memory 53, the first machining path data DP1 indicating the first machining path generated by the machining path generator 5 (more specifically, the calculator 52) (see FIG. 44).

In a fifth step ST5, the second machining path for producing the second rectangular pipe 3 from the second pipe material Q2 different from the first pipe material Q1 is generated. The fifth step ST5 is a second machining path generation process.

The second machining path generation process (fifth step ST5) includes generating the second machining path for producing the second rectangular pipe 3 from the second pipe material Q2 based on the three-dimensional shape data of the second pipe model M2. The second machining path is already described in embodiment 2. Thus, redundant description on the second machining path will be omitted.

The second machining path generation process (fifth step ST5) may be automatically performed by the machining path generator 5 (more specifically, the calculator 52) executing the program P. More specifically, the second machining path generation process (fifth step ST5) may include automatically generating the second machining path for producing the second rectangular pipe 3 by the calculator 52 based on the three-dimensional shape data DT2 of the second pipe model M2.

The second machining path generation process (fifth step ST5) may include storing, in the memory 53, the second machining path data DP2 indicating the second machining path generated by the machining path generator 5 (more specifically, the calculator 52) (see FIG. 44).

The fifth step ST5 may be executed before the fourth step ST4 is executed, after the fourth step ST4 is executed, or in parallel with the fourth step ST4.

The laser beam machining method of embodiment 3 includes, in addition to the above-described first step ST1 to fifth step ST5, (1) creating at least one machining program PG based at least on the first machining path and the second machining path, (2) generating the control command SA by the controller 7 executing the at least one machining program PG, (3) producing the first rectangular pipe 2 from the first pipe material Q1 with the first pipe material Q1 irradiated with a laser beam from the laser beam machine 101 receiving the control command SA, and (4) producing the second rectangular pipe 3 from the second pipe material Q2 with the second pipe material Q2 irradiated with a laser beam from the laser beam machine 101 receiving the control command SA.

With the machining path generation method according to embodiment 3 (or the laser beam machining method according to embodiment 3), two rectangular pipes that can be easily positioned with each other can be easily produced.

### (Optional Configurations)

Next, optional configurations that can be adopted in the machining path generation method and the laser beam machining method according to embodiment 3 will be described with reference to FIG. 1 to FIG. 50.

### (Machining Path Generator 5A, Laser Beam Machining System 100A)

The above-described first step ST1 to fifth step ST5 are, for example, executed by the machining path generator 5A (more specifically, the CAD/CAM device 10a) according to embodiment 2 or the laser beam machining system 100A according to embodiment 2. The machining path generator 5A and the laser beam machining system 100A are already described in embodiment 2. Thus, redundant description on the machining path generator 5A and the laser beam machining system 100A will be omitted.

### (Display of Assembly Model AM)

As in the example illustrated in FIG. 40 or FIG. 46, the machining path generation method according to embodiment 3 may include a process (hereinafter, referred to as "first display process") of displaying, on the display 55, the assembly model AM, which is a combination of a plurality of models including the above-described first basic model M1b and the above-described second basic model M2b. The first display process is one aspect of the above-described preparation process. The first display process includes displaying the above-described assembly model AM on the display 55 by the calculator 52 executing the program P stored in the memory 53.

In the example illustrated in FIG. 40 or FIG. 46, the assembly model AM displayed on the display 55 includes the first basic model M1b and the second basic model M2b. As in the example illustrated in FIG. 46, the assembly model AM displayed on the display 55 may include the third basic model M3b. As in the example illustrated in FIG. 40 or FIG. 46, a three-dimensional shape (for example, a shape in perspective view) of the assembly model AM may be displayed on the display 55.

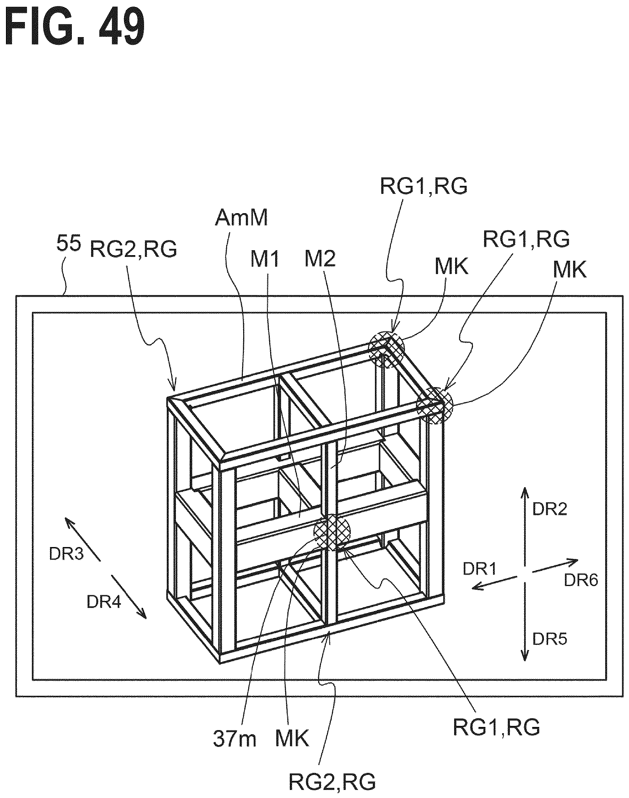

In the example illustrated in FIG. 39, when a region indicating the boundary between two adjacent basic models Mb is defined as a boundary region RG, the assembly model AM includes a plurality of boundary regions RG. When the assembly model AM includes the plurality of boundary regions RG, it may be difficult for the user to recognize which of the boundary regions RG corresponds to the shape corrected. Thus, as in the example illustrated in FIG. 49, the machining path generation method according to embodiment 3 may include adding a marking MK for distinguishing a shape corrected boundary region RG1 from other boundary regions RG2 to the assembly model AM displayed on the display 55. For example, assume that the shapes of three boundary regions RG are newly corrected in the assembly model AM illustrated in FIG. 39. In this case, as in the example illustrated in FIG. 49, three markings MK are newly added to the assembly model AM. In the example illustrated in FIG. 49, the markings MK have a circular shape. Alternatively, the markings MK may have another shape (for example, a polygonal shape).

As in the example illustrated in FIG. 46, the machining path generation method according to embodiment 3 may include upon selection of the first basic model M1b in the assembly model AM displayed on the display 55, highlighting the first basic model M1b in the assembly model AM displayed on the display 55. The highlighting is implemented by setting the color of the first basic model M1b to be different from the colors of the other models in the assembly model AM.

As in the example illustrated in FIG. 47, the machining path generation method according to embodiment 3 may include upon designation, on the inputter 4, of the intersection Jb (see the dashed-line arrow AR1 in FIG. 47), with the second basic model M2b, of the first basic model M1b selected on the inputter 54, displaying, on the display 55, an image IG for receiving an instruction for correcting the shape of the intersection Jb between the first basic model M1b and the second basic model M2b.

In the example illustrated in FIG. 47, the image IG for receiving an instruction for correcting the shape of the intersection Jb includes an image IG1 (more specifically, an image of the first button BN1) requesting for an approval on the formation of the second notch in the second basic model M2b at the intersection Jb.

### (First Pipe Model Creation Process and Second Pipe Model Creation Process)

In the example illustrated in FIG. 41 and FIG. 42 or FIG. 47 and FIG. 48, the first pipe model creation process includes creating the first pipe model M1 from the first basic model M1b by correcting the shape of the first basic model M1b. The second pipe model creation process includes creating the second pipe model M2 from the second basic model M2b by correcting the shape of the second basic model M2b.

The first pipe model creation process and the second pipe model creation process are performed by the machining path generator 5 (more specifically, the calculator 52 executing the program P).

In the example illustrated in FIG. 41 and FIG. 42 or FIG. 47 and FIG. 48, the second pipe model creation process (third step ST3) includes automatically determining, by the calculator 52, the length dimension L2m of the first portion 30m in the direction along the second direction DR2, to set the length dimension L2m (for example, see FIG. 42) of the first portion 30m in a direction along the second direction DR2 to be substantially the same as the width dimension w1b of the first basic model M1b in a direction along the second direction DR2 (for example, see FIG. 41).

The second pipe model creation process (third step ST3) may include automatically determining, by the calculator 52, the width dimension w2 of the first portion 30m in the direction along the first direction DR1 (see FIG. 42). Alternatively, as in the example illustrated in FIG. 43, the calculator 52 may determine the width dimension w2 of the first portion 30m based on the user input on the inputter 4. In the example illustrated in FIG. 43, the calculator 52 causes the input window C1 for inputting the depth dimension of the second notch 37m (in other words, the notched amount) to be displayed on the display 55. In this case, the calculator 52 determines the width dimension w2 of the first portion 30m based on the numerical value input on the input window C1. The calculator 52 may cause a recommended value (for example, a value registered in advance by the user) for the depth dimension of the second notch 37m to be displayed on the display 55. In this case, the user can input on the inputter 54, the depth dimension of the second notch 37m to the calculator 52, while referring to the recommended value.

In the example illustrated in FIG. 41 and FIG. 42 or FIG. 47 and FIG. 48, correcting the shape of the second basic model M2b includes forming in the second basic model M2b, the second notch 37m that can receive one (more specifically, the first C-shaped edge surface 24me) of the plurality of edge surfaces Em1 (see FIG. 28) defining the first notch 20m.

In the example illustrated in FIG. 41 and FIG. 42 or FIG. 47 and FIG. 48, correcting the shape of the second basic model M2b includes forming in the second basic model M2b, the third notch 38m that can receive one (more specifically, the second C-shaped edge surface 27me) of the plurality of edge surfaces Em1 (see FIG. 28) defining the first notch 20m.

In the example illustrated in FIG. 41 and FIG. 42 or FIG. 47 and FIG. 48, forming the second notch 37m and the third notch 38m in the second basic model M2b includes removing the two plate portions 34b (see FIG. 38) from the second basic model M2b at the intersection Jb between the first basic model M1b and the second basic model M2b. As a result of removing the two plate portions 34b, the second notch 37m and the third notch 38m (see FIG. 29) are formed.

In the example illustrated in FIG. 41 and FIG. 42 or FIG. 47 and FIG. 48, the first pipe model creation process (second step ST2) includes creating the first pipe model M1 from the first basic model M1b by reducing the width dimension of the basic notch 20mb (see FIG. 41) in the first direction DR1 by the calculator 52, to set the above-described first value v1 (see FIG. 42) to be substantially the same as the width dimension w2 (see FIG. 42) of the first portion 30m in the direction along the first direction DR1.

In the example illustrated in FIG. 42 or FIG. 48, the calculator 52 executing the program P automatically determines the above-described first value v1 to set the above-described first value v1 to be substantially the same as the width dimension w2 based on the width dimension w2 of the first portion 30m in the direction along the first direction DR1.

In the example illustrated in FIG. 41 and FIG. 42 or FIG. 47 and FIG. 48, after the formation of the second notch in the second basic model M2b at the intersection Jb between the first basic model M1b and the second basic model M2b is approved using the inputter 4 (for example, after the first button BN1 displayed on the display 55 is clicked using the pointer 54p), the calculator 52 creates the second pipe model M2 from the second basic model M2b by automatically forming the second notch 37m and/or the third notch 38m in the second basic model M2b, based on the width dimension w1b of the first basic model M1b (for example, see FIG. 41).

In the example illustrated in FIG. 41 and FIG. 42 or FIG. 47 and FIG. 48, after the formation of the second notch in the second basic model M2b at the above-described intersection Jb is approved using the inputter 4, the calculator 52 creates the first pipe model M1 from the first basic model M1b, by automatically reducing the width dimension of the basic notch 20mb in the first direction DR1, based on the above-described width dimension w2 of the first portion 30m.

### (Display of First Pipe Model M1 and Second Pipe Model M2)

As in the example illustrated in FIG. 42 or FIG. 48, the machining path generation method according to embodiment 3 may include a process (hereinafter, referred to as "second display process") of displaying the above-described first pipe model M1 and/or the above-described second pipe model M2 on the display 55.

In the example illustrated in FIG. 42 or FIG. 48, the second display process includes displaying, on the display 55, a corrected assembly model AmM that is an combination of a plurality of models including the first pipe model M1 and the second pipe model M2. More specifically, the second display process includes displaying the corrected assembly model AmM on the display 55 by the calculator 52 executing the program P stored in the memory 53. The corrected assembly model AmM is an assembly model created by correcting the shape of the assembly model Am.

In the examples illustrated in FIG. 41 and FIG. 42, or FIG. 47 and FIG. 48, displaying the first pipe model M1 on the display 55 includes displaying the first pipe model M1 (see FIG. 42 or FIG. 48) at a position (see FIG. 41 or FIG. 47) where the first basic model M1b has been displayed. In the examples illustrated in FIG. 41 and FIG. 42, or FIG. 47 and FIG. 48, displaying the second pipe model M2 on the display 55 includes displaying the second pipe model M2 (see FIG. 42 or FIG. 48) at a position (see FIG. 41 or FIG. 47) where the second basic model M2b has been displayed.

With the second pipe model M2 displayed at the position where the second basic model M2b has been displayed, the user can easily recognize that a notch such as the second notch 37m is formed in the second basic model M2b. As in the example illustrated in FIG. 49, the display 55 may display a marking MK indicating the shape correction at the position corresponding to the intersection where the second notch 37m is formed.

In the example illustrated in FIG. 42 or FIG. 48, the first pipe model M1 and the second pipe model M2 are simultaneously displayed on the display 55. In the example illustrated in FIG. 41 and FIG. 42 or FIG. 47 and FIG. 48, simultaneously displaying the first pipe model M1 and the second pipe model M2 on the display 55 includes displaying the first pipe model M1 in place of the first basic model M1b and displaying the second pipe model M2 in place of the second basic model M2b.

### (Laser Beam Machining Method)

The laser beam machining method according to embodiment 3 includes creating at least one machining program PG. More specifically, after the above-described first step ST1 to fifth step ST5 are executed, in a sixth step ST6, at least one machining program PG is created. The sixth step ST6 is a machining program creation process.

The machining program creation process (sixth step ST6) includes creating at least one machining program PG based at least on the first machining path and the second machining path. Any known algorithm can be adopted for an algorithm for creating at least one machining program PG based on a machining path such as the first machining path and the second machining path.

The machining path generator 5 (more specifically, the calculator 52) executing the program P may create at least one machining program PG. Alternatively, the controller 7 may create at least one machining program PG.

When the machining path generator 5 creates at least one machining program PG, the laser beam machining method according to embodiment 3 includes receiving the machining program PG created by the machining path generator 5, by the controller 7. More specifically, the laser beam machining method according to embodiment 3 includes receiving at least one machining program PG by the controller 7 from the machining path generator 5.

On the other hand, when the controller 7 creates at least one machining program PG, the laser beam machining method according to embodiment 3 includes receiving the first machining path data DP1 indicating the first machining path and the second machining path data DP2 indicating the second machining path by the controller 7 and creating at least one machining program PG by the controller 7 based at least on the first machining path and the second machining path.

The laser beam machining method according to embodiment 3 includes generating the control command SA based on at least one machining program PG. More specifically, in a seventh step ST7 after the execution of the above-described sixth step ST6, the controller 7 executing at least one machining program PG generates the control command SA. The seventh step ST7 is a control command generation process.

The controller 7 is already described in embodiment 2. Thus, redundant description on the controller 7 will be omitted.

The laser beam machining method according to embodiment 3 includes producing the first rectangular pipe 2 from the first pipe material Q1. More specifically, in an eighth step ST8 after the execution of the above-described seventh step ST7, the laser beam machine 101 receiving the control command SA irradiates the first pipe material Q1 with a laser beam to produce the first rectangular pipe 2 from the first pipe material Q1. The eighth step ST8 is a first rectangular pipe production process.

The laser beam machine 101 is already described in embodiment 1. Thus, redundant description on the laser beam machine 101 will be omitted. As in the example illustrated in FIG. 34, when the laser beam machine 101 includes the machining head 140 holding a tool such as the machining tool 141, the first rectangular pipe production process (eighth step ST8) may include machining the first pipe material Q1 using the tool by the laser beam machine 101 receiving the control command SA.

The laser beam machining method according to embodiment 3 includes producing the second rectangular pipe 3 from the second pipe material Q2 different form the first pipe material Q1. More specifically, in a ninth step ST9 after the execution of the above-described seventh step ST7, the laser beam machine 101 receiving the control command SA irradiates the second pipe material Q2 with a laser beam to produce the second rectangular pipe 3 from the second pipe material Q2. The ninth step ST9 is a second rectangular pipe production process. As in the example illustrated in FIG. 35, when the laser beam machine 101 includes the machining head 140 holding a tool such as the machining tool 141, the second rectangular pipe production process (ninth step ST9) may include machining the second pipe material Q2 using the tool by the laser beam machine 101 receiving the control command SA.

The ninth step ST9 may be executed before the eighth step ST8 is executed, executed after the eighth step ST8 is executed, or executed in parallel with the eighth step ST8.

### (Program P)

The program P according to embodiments is a program for causing the machining path generator 5 or the laser beam machining system 100 to execute the machining path generation method according to embodiment 3.

More specifically, the program P according to embodiments is a program causing the machining path generator 5 or the laser beam machining system 100 to perform the machining path generation method including (1) creating, as the shape model of the first rectangular pipe 2, the first pipe model M1 that includes the first notch 20m having the width dimension of the first value v1 in a direction along the first direction DR1 and the length dimension of the second value v2 in a direction along the second direction DR2, and extends in the first direction DR1, (2) creating, as the shape model of the second rectangular pipe 3 to be disposed to cross the first rectangular pipe 2, the second pipe model M2 that includes the first portion 30m received in the first notch 20m and the second portion 41m extending in the second direction DR2 from the first portion 30m, (3) generating the first machining path for producing the first rectangular pipe 2 from the first pipe material Q1, based on three-dimensional shape data of the first pipe model M1, and (4) generating the second machining path for producing the second rectangular pipe 3 from the second pipe material Q2, based on three-dimensional shape data of the second pipe model M2, (5) the width dimension w2 of the first portion 30m in the direction along the first direction DR1 being smaller than the width dimension w22 of the second portion 41m in the direction along the first direction DR1, (6) the length dimension L2m of the first portion 30m in the direction along the second direction DR2 being substantially the same as the second value v2, (7) the width dimension w2 of the first portion 30m in the direction along the first direction DR1 being substantially the same as the first value v1.

The machining path generation method according to embodiment 3 is already described. Thus, redundant description on the machining path generation method according to embodiment 3 will be omitted.

The program P may include a plurality of sub-programs. For example, the program P may include a sub program for executing the above-described first step ST1 (preparation process), the above-described second step ST2 (first pipe model creation process), and the above-described third step ST3 (second pipe model creation process), and a sub-program for executing the above-described fourth step ST4 (first machining path generation process) and the above-described fifth step ST5 (second machining path generation process).

The program P may include a program for executing the above-described sixth step ST6 (machining program creation process). In other words, the program P according to embodiments may be a program causing the machining path generator 5 or the laser beam machining system 100 to perform a machining program creation method including the above-described first step ST1 to sixth step ST6.

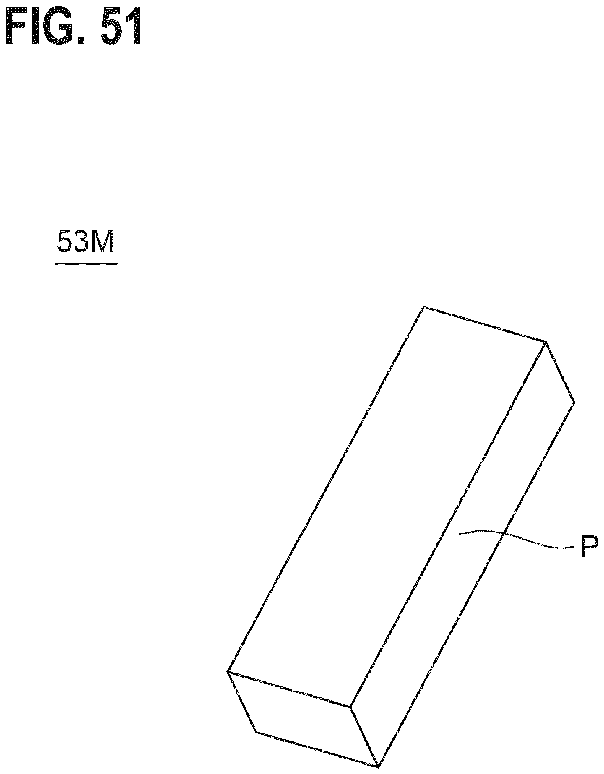

The memory 53 according to embodiment 1 may be a non-volatile storage medium in which the above-described program P is recorded. The non-volatile storage medium in which the above-described program P is recorded may be a portable storage medium 53M as in the example illustrated in FIG. 51.

The program P according to embodiments provides the same effects as the machining path generation method according to embodiment 3 when executed by the machining path generator 5 or the laser beam machining system 100.

The present invention is not limited to the embodiments or modifications described above. It is a matter of course that the embodiments and modifications can be deformed or modified within the scope of the technical idea of the present invention. Various techniques used in the embodiments and modifications are applicable to other embodiments and modifications unless any technical contradiction arises. Furthermore, optional configurations in the embodiments and modifications can be omitted as appropriate.

### Description of the Reference Numeral

1 ... Pipe assembly, 2 ... First rectangular pipe, 2u ... Outer surface of first rectangular pipe, 2mu ... Outer surface of first pipe model, 3 ... Second rectangular pipe, 3u ... Outer surface of second rectangular pipe, 3mu ... Outer surface of second pipe model, 4 ... Inputter, 5, 5A ... Machining path generator, 7 ... Controller, 10a ... CAM device, 20, 20m ... First notch, 20mb ... Basic notch, 21, 21m ... Fourth portion, 21e, 21me ... First linear edge surface, 22e, 22me ... Second linear edge surface, 23c-1 ... First arcuate corner portion, 23c-2 ... Second arcuate corner portion, 23s-1 ... First linear portion, 23s-2 ... Second linear portion, 23s-3 ... Third linear portion, 24, 24m ... Fifth portion, 24e, 24me ... First C-shaped edge surface, 24u ... Outer circumference surface of fifth portion, 25c ... Arcuate corner portion, 25s ... Linear portion, 27, 27m ... Sixth portion, 27e, 27me ... Second C-shaped edge surface, 27u ... Outer circumference surface of sixth portion, 28c ... Arcuate corner portion, 28s ... Linear portion, 30, 30m ... First portion, 31c ... Arcuate corner portion, 31s ... Linear portion, 34b ... Plate portion, 35, 35m ... First plate portion, 35e ... First edge surface of first plate portion, 35f ... Second edge surface of first plate portion, 36, 36m ... Second plate portion, 36e ... First edge surface of second plate portion, 36f ... Second edge surface of second plate portion, 37, 37m ... Second notch, 38, 38m ... Third notch, 41, 41m ... Second portion, 41e ... First edge surface of second portion, 41f ... Second edge surface of second portion, 42c ... Arcuate corner portion, 42s ... Linear portion, 46, 46m ... Third portion, 46e ... First edge surface of third portion, 46f ... Second edge surface of third portion, 47c ... Arcuate corner portion, 47s ... Linear portion, 52 ... Calculator, 52a ... Processor, 53 ... Memory, 53M ... Storage medium, 54 ... Inputter, 54k ... Keyboard, 54p ... Pointer, 55 ... Display, 56 ... Communication circuit, 57 ... Path, 72 ... Display, 73 ... Inputter, 74 ... Calculator, 75 ... Communication circuit, 76 ... Memory, 77 ... Bus, 91 ... CAD device, 100, 100A... Laser beam machining system, 101 ... Laser beam machine, 103 ... Carry-in part, 105 ... Laser beam machining unit, 107 ... Carry-out part, 110 ... Laser beam emitter, 111 ... Laser head, 112 ... Laser beam emission port, 113 ... Laser beam light source, 115 ... Optical component, 120 ... Mover, 121 ... First mover, 122a ... First moving body, 122b ... First driver, 123a ... Second moving body, 123b ... Second driver, 130 ... Workpiece supporter, 131 ... First chuck, 132 ... Holding component, 134 ... Second chuck, 135 ... Guide roller, 137 ... Rotational driver, 140 ... Machining head, 141 ... Machining tool, 351e ... First side edge of first plate portion, 352e ... Second side edge of first plate portion, 365 ... Main surface of second plate portion, 411e ... Fifth direction side end edge of second portion, 412e ... Fifth direction side end edge of second portion, 461e ... Second direction side end edge of third portion, 462e ... Second direction side end edge of third portion, 521 ... Shape data creation unit, 523 ... Machining path generation unit, AM ... Assembly model, AmM ... Corrected assembly model, BN1 ... First button, C1 ... Input window, D1 ... Depth dimension of first rectangular pipe, D2 ... Depth dimension of first portion of second rectangular pipe, D22 ... Depth dimension of second portion of second rectangular pipe, D23 ... Depth dimension of third portion of second rectangular pipe, D4 ... Second rectangular pipe of second notch, D5 ... Depth dimension of third notch, DA ... Shape data of plurality of basic models, DA1 ... Shape data of first basic model, DA2 ... Shape data of second basic model, DP1 ... First machining path data, DP2 ... Second machining path data, DR1 ... First direction, DR2 ... Second direction, DR3 ... Third direction, DR4 ... Fourth direction, DR5 ... Fifth direction, DR6 ... Sixth direction, DT1 ... Three-dimensional shape data of first pipe model, DT2 ... Three-dimensional shape data of second pipe model, E1, E2, E3, Em1 ... Edge surface, F ... File, GP ... Gap, IG ... Image for receiving instruction for correcting shape of intersection, IG1 ... Image requesting for approval, J, Jb ... intersection, K1, K2 ... Boundary portion, L2, L2m ... Length dimension of first portion, LN ... Wire, M1 ... First pipe model, M1b ... First basic model, M2 ... Second pipe model, M2b ... Second basic model, M3b ... Third basic model, MK ... marking, Mb ... basic model, P ... Program, PG ... Machining program, PJ ... Calculation program, Q ... Pipe material, Q1 ... First pipe material, Q2 ... Second pipe material, RG ... Boundary region, RG1 ... Shape corrected boundary region, RG2 ... Boundary region without shape correction, SA ... Control command, SA1 ... Movement command, SA2 ... Emission command, SP1 ... Work room, SP2 ... Office space, T ... Welding portion, T1 ... First welding portion, T2 ... Second welding portion, T3 ... Third welding portion, T4 ... Fourth welding portion, T5 ... Fifth welding portion, T6 ... Sixth welding portion, V1, v1 ... First value, V2, v2 ... Second value, V3, v3 ... third value, W1 ... Width dimension of first rectangular pipe, W2 ... Width dimension of first portion of second rectangular pipe, W22 ... Width dimension of second portion of second rectangular pipe, W23 ... Width dimension of third portion of second rectangular pipe, W2p ... Width dimension of first plate portion, d2 ... Depth dimension of first portion of second pipe model, v1b ... Width dimension of basic notch, v2b ... Length dimension of basic notch, v3b ... Depth dimension of basic notch, w1b ... Width dimension of first basic model, w2 ... Width dimension of first portion of second pipe model, w22 ... Width dimension of second portion of second pipe model, w23 ... Width dimension of third portion of second pipe model

## Claims

1. A pipe assembly comprising:
a first rectangular pipe that includes a first notch having a width dimension of a first value in a direction along a first direction and a length dimension of a second value in a direction along a second direction, and extends in the first direction; and
a second rectangular pipe that includes a first portion received in the first notch and a second portion extending in the second direction from the first portion, and is disposed to cross the first rectangular pipe, wherein
a width dimension of the first portion in the direction along the first direction is smaller than a width dimension of the second portion in the direction along the first direction,
a length dimension of the first portion in the direction along the second direction is substantially the same as the second value, and
the width dimension of the first portion in the direction along the first direction is substantially the same as the first value.

2. The pipe assembly according to claim 1, wherein
the second portion includes four linear portions and four arcuate corner portions in a cross section orthogonal to the second direction, and
the first portion includes only two linear portions in a cross section orthogonal to the second direction.

3. The pipe assembly according to claim 1 or 2, wherein with a depth dimension of the first notch in a direction along a third direction defined as a third value, a depth dimension of the first portion in a direction along the third direction is substantially the same as the third value.

4. The pipe assembly according to claim 3, wherein a depth dimension of the second portion in a direction along the third direction is smaller than a depth dimension of the first rectangular pipe in the third direction.

5. The pipe assembly according to claim 3 or 4, wherein with a direction opposite to the third direction defined as a fourth direction, an outer surface of the first portion on a side towards the fourth direction is substantially flush with an outer surface of the first rectangular pipe on the side towards the fourth direction.

6. The pipe assembly according to any one of claims 1 to 5, wherein
with a direction opposite to the second direction defined as a fifth direction, the second rectangular pipe includes a third portion extending in the fifth direction from the first portion, and
the width dimension of the first portion in the direction along the first direction is smaller than a width dimension of the third portion in the direction along the first direction.

7. The pipe assembly according to any one of claims 1 to 6, wherein
the first portion of the second rectangular pipe includes a first plate portion and a second plate portion disposed opposite to the first plate portion,
the second rectangular pipe includes a second notch defined by edge surfaces of a first group including a first edge surface of the second portion, a first edge surface of the first plate, and a first edge surface of the second plate portion, and
part of the first rectangular pipe is received in the second notch.

8. The pipe assembly according to claim 7, wherein
the first rectangular pipe includes a first C-shaped edge surface, a second C-shaped edge surface, a first linear edge surface, and a second linear edge surface,
the second plate portion is sandwiched by the first C-shaped edge surface and the second C-shaped edge surface, and
the second plate portion is disposed opposite to the first linear edge surface and the second linear edge surface.

9. The pipe assembly according to any one of claims 1 to 7, wherein
the first rectangular pipe includes a first C-shaped edge surface and a second C-shaped edge surface, and
the first portion of the second rectangular pipe is sandwiched by the first C-shaped edge surface and the second C-shaped edge surface.

10. The pipe assembly according to any one of claims 1 to 9, wherein
the first rectangular pipe and the first portion of the second rectangular pipe are welded and connected to each other by a first welding portion, and
the first rectangular pipe and the second portion of the second rectangular pipe are welded and connected to each other by a second welding portion.

11. A machining path generation method comprising
creating, as a shape model of a first rectangular pipe, a first pipe model that includes a first notch having a width dimension of a first value in a direction along a first direction and a length dimension of a second value in a direction along a second direction, and extends in the first direction;
creating, as a shape model of a second rectangular pipe to be disposed to cross the first rectangular pipe, a second pipe model that includes a first portion received in the first notch and a second portion extending in the second direction from the first portion;
generating a first machining path for producing the first rectangular pipe from a first pipe material, based on three-dimensional shape data of the first pipe model; and
generating a second machining path for producing the second rectangular pipe from a second pipe material, based on three-dimensional shape data of the second pipe model, wherein
a width dimension of the first portion in the direction along the first direction is smaller than a width dimension of the second portion in the direction along the first direction,
a length dimension of the first portion in the direction along the second direction is substantially the same as the second value, and
the width dimension of the first portion in the direction along the first direction is substantially the same as the first value.

12. The machining path generation method according to claim 11, further comprising preparing a plurality of basic models including a first basic model that is a basic shape model of the first rectangular pipe and a second basic model that is a basic shape model of the second rectangular pipe, wherein
the creating the second pipe model includes automatically determining by a calculator, the length dimension of the first portion in the direction along the second direction to set the length dimension of the first portion in the direction along the second direction to be substantially the same as a width dimension of the first basic model in the direction along the second direction.

13. The machining path generation method according to claim 11, further comprising preparing a plurality of basic models including a first basic model that includes a basic notch and is a basic shape model of the first rectangular pipe and a second basic model that is a basic shape model of the second rectangular pipe, wherein
the creating the first pipe model includes creating the first pipe model from the first basic model by reducing a width dimension of the basic notch in the first direction to set the first value to be substantially the same as the width dimension of the first portion in the direction along the first direction.

14. A program causing a machining path generator or a laser beam machining system to perform the machining path generation method according to any one of claim 11 to 13.

15. A laser beam machining system comprising:
a machining path generator configured to execute first processing of creating, as a shape model of a first rectangular pipe, a first pipe model that includes a first notch having a width dimension of a first value in a direction along a first direction and a length dimension of a second value in a direction along a second direction, and extends in the first direction, second processing of creating, as a shape model of a second rectangular pipe to be disposed to cross the first rectangular pipe, a second pipe model that includes a first portion received in the first notch and a second portion extending in the second direction from the first portion, third processing of generating a first machining path for producing the first rectangular pipe from a first pipe material, based on three-dimensional shape data of the first pipe model, and fourth processing of generating a second machining path for producing the second rectangular pipe from a second pipe material, based on three-dimensional shape data of the second pipe model;
a controller configured to execute at least one machining program created based at least on the first machining path and the second machining path, to generate a control command and transmit the generated control command to a laser beam machine; and
the laser beam machine configured to operate based on the control command to produce the first rectangular pipe from the first pipe material by irradiating the first pipe material with a laser beam, and produce the second rectangular pipe from the second pipe material by irradiating the second pipe material with the laser beam, wherein
the second processing includes creating the second pipe model with a width dimension of the first portion in the direction along the first direction set to be smaller than a width dimension of the second portion in the direction along the first direction, and with a length dimension of the first portion in the direction along the second direction to be substantially the same as the second value, and
the first processing includes creating the first pipe model with the first value being substantially the same as the width dimension of the first portion in the direction along the first direction.
